Europäisches Patentamt

European Patent Office

Office européen des brevets

(19)

(11) EP 1 276 331 A2

(12) **EUROPEAN PATENT APPLICATION**

(43) Date of publication:
**15.01.2003 Bulletin 2003/03**

(51) Int Cl.7: **H04N 7/36**

(21) Application number: **02006387.1**

(22) Date of filing: **31.03.2000**

(84) Designated Contracting States:
**AT BE CH CY DE DK ES FI FR GB GR IE IT LI LU MC NL PT SE**

(30) Priority: **01.04.1999 US 283947**
**06.04.1999 US 287535**
**29.06.1999 US 342527**
**10.12.1999 US 467552**

(62) Document number(s) of the earlier application(s) in accordance with Art. 76 EPC:
**00921604.5 / 1 166 566**

(71) Applicant: **Ravisent Technologies, Inc.**
**Malvern, PA 19355-1308 (US)**

(72) Inventors:
• **Wolff, Robert M.**
**Fremont, CA 94536 (US)**

• **Langer, Randy**
**Port Orchard, WA 98366 (US)**
• **Sigmund, Ulrich**
**79183 Waldkirch (DE)**

(74) Representative: **Schoppe, Fritz, Dipl.-Ing.**
**Patentanwälte Schoppe, Zimmermann,**
**Stöckeler & Zinkler,**
**Postfach 71 08 67**
**81458 München (DE)**

Remarks:
This application was filed on 21 - 03 - 2002 as a divisional application to the application mentioned under INID code 62.

(54) **Method for preventing dual-step half-pixel motion compensation accumulation errors in prediction-rich MPEG-2 sequences**

(57) A two-step motion prediction for MPEG-2 interpolation case-D will yield visual artifacts if not corrected. An improved MPEG-2 decoder includes a logic gate, multiplexer, and adder. When both the horizontal ($h_0$) and vertical ($h_1$) motion vector components require a half pixel interpolation (case-D), the multiplexer forwards the constant minus three to the adder, otherwise a constant zero is used. Such adder modifies the DC coefficient input to the inverse discrete cosine transformer to include a correction term for the predicted pixels calculated by a two-step predictor. A correction value of -0.375 is evenly distributed over all sixty-four resulting spatial coefficients during the inverse discrete cosine transform. This results statistically in a slightly brighter set of correction terms. Such offsets result in a slightly darker prediction that is formed by the two-step predictor. The output frames are statistically correct images.

FIG 1 (PRIOR ART)

EP 1 276 331 A2

**Description**

## BACKGROUND OF THE INVENTION

**TECHNICAL FIELD**

The invention relates to data processing. More particularly, the invention relates to handling and manipulating high-speed streaming data in a computing device. The invention also relates to a multi-byte search, for example to locate a pattern in streaming data. More particularly, the invention relates to a high-speed mechanism for scanning a real-time stream of data to locate a start-code-prefix in an MPEG-2 data stream, and streams that use the exact same start-code paradigm. The same general algorithm can be applied to search patterns of any byte length, and is especially useful in cases where the length of the search pattern is an odd number of bytes. The invention further relates to data compression as used in the coding of studio-quality video for digital TV, high-density CD-ROMs and TV-broadcasting, and relates more particularly to MPEG2 type datastream decompression in which a pre-parser locates data-structure information in a MPEG2 datastream and substantially relieves all subsequent decompression and renderer stages from the tedious job of parsing. The present invention additionally relates to computer and digital data compression, and more specifically to preventing rounding errors that can accumulate in MPEG-2 type decompression.

**DESCRIPTION OF THE PRIOR ART**

The transfer of information in the form of streaming data is of increasing importance. Streaming data are data that are transferred, typically in real time, as a continuous and uninterrupted stream using such formats as MPEG2. While MPEG-2 has been used in static media such as DVD and is well known to the general public, it is less known that MPEG-2 has been used in streaming (real-time) applications such as digital satellite broadcast, *e.g.* DSS, DVB, Primestar, and Dishnetwork.

In such environments, the data are transmitted at variable rates. This streaming of data presents significant problems to a device that is to receive the data. For example, it is not possible to go back and resample the data as with a DVD because the data are streaming, *i.e.* they are not fixed on a medium that may be reread if an error in data transfer is detected - they have evaporated into the ether. Thus, it is extremely difficult to recover from a failure in the transfer of a data block where the data block is part of an emphemeral data stream.

Heavy use of memory copying and/or heavy use of allocation and deallocation of software objects and/or hardwired & inflexible memory usage have been the traditional software engineering approaches to solving the problem of processing streaming data. All of these methods require a significant percentage of available computing time and bandwidth inside the computing device. In the non-streaming case, compute time is generally not as significant an issue because a job can be processed in a pseudo batch mode. Unfortunately, in the case of streaming media, such as satellite data in the form of audio, video, and data, there is no way to control the rate of the incoming data. Poor data handling leads to input data overruns and a resultant loss of input data.

The computing device must be capable of handling the data stream in a worst case scenario. When a large amount of memory copying or allocation and deallocation is performed in the computing device, the system has fewer resources available for processing other incoming requests and for general activities. This leaves the computing device with too much to do in heavy loading cases, with errors or data loss being the result.

A possible approach to solving the problem of processing streaming data may be provided by a memory manager, such as SmartHeap™, which uses a recycled memory buffer for the specific purpose of memory management. However, these techniques have not been applied to the realm of streaming media. It is also possible to use multiple threads for streamlining control and delineation of duties. Again, such known technology is not specifically targeted to the problems associated with the handling of streaming media. Therefore, these techniques are not specifically made for streaming and are found to be suboptimal due to their lack of specific focus on these streaming issues.

It would be advantageous to provide an efficient and reliable method and apparatus for processing streaming data in a computer system.

The MPEG-2 standard is often used for the formatting and transmission of audio and video information (for more information on the MPEG-2 standard, see http://www.mpeg.org). Due to the widespread use of the MPEG-2 standard, it has been desirable to implement a high-speed mechanism for scanning a real-time (i.e. no flow control) stream of MPEG-2 data to locate start code prefixes (*i.e.* byte patterns that delimit the structural components or packets which constitute the data stream). This is necessary because the data in such stream are passed to a system for processing in real time. Accordingly, each elementary unit of the stream must be reliably identified in real time for such unit to be parsed into its constituent parts and processed at a rate commensurate with the incoming data rate. Such start code prefix scanning typically represents a very significant portion of the overall CPU use in MPEG-2 processing programs, in some cases exceeding 50% of CPU use.

In the MPEG-2 standard (see ISO/IEC 13818-1:1996(E) Table 2-17 and ISO/IEC 13818-1:1996(E). Tables 2-2, 2-6, 2-25, 2-27, and 2-28), a start-code-prefix is represented by the 8-bit-aligned byte pattern 0x00 0x00 0x01, with the following additional constraints:

- If the three bytes following the 0x00 0x00 0x01 pattern are all 0x00, it is not a valid start code and should be so rejected by the scanner.

- For an audio packetized elementary stream (PES), the only valid values for the byte following the 0x00 0x00 0x01 pattern lie in the range 0xC0 through 0xDF, inclusive. For video, the reverse is true: if the byte following the 0x00 0x00 0x01 pattern in a video stream lies in the range of 0xC0 through 0xDF, inclusive, it is not a valid start code, and the scanner must reject it.

- Because some present MPEG-2 implementations use MPEG-1 format in their audio PES streams, it is possible for a seemingly valid start code to appear in the payload because it is not illegal for an MPEG-1 audio stream to contain 0x00 0x00 0x01 as part of its compressed payload. The next few bytes following the start code pattern can be examined to validate further the presence of a real start code, but there is no guaranteed algorithm to insure that audio start code synchronization is maintained during scanner operation on an MPEG-1-conforming audio channel. This problem does not exist for conformant MPEG-2 video and audio channels. In fact, it is guaranteed in the MPEG-2 specification that this can never occur.

There are two approaches that have been used in the art to address the issue of MPEG-2 start code scanning:

- A serial read of the incoming bytes looking for a 0x00 0x00 0x01 pattern. This approach is processor intensive.

- Reading the MPEG-2 data into a buffer, and then examining every third byte to see if it is a 0x00 or 0x01. When either value is found, the neighboring bytes are examined to see if they constitute a 0x00 0x00 0x01 pattern. This byte-wide search is also processor intensive, although considerably less so than the first approach.

Neither above cited approach is particularly efficient because a significant amount of processor time is expended not only in looking for a target byte value(s), but in further qualifying the neighboring bytes to determine if a complete start code has been discovered. The first technique cited above can be coded in assembly language for processors having so called string instructions, such as the Intel 80x86/Pentium family, and achieve a performance boost.

Nonetheless, it would be advantageous to provide an algorithm that is more efficient than either of the two above-cited techniques, even when they are coded in assembly language.

Graphics and certainly digital movies can overwhelm ordinary computer memory storage and communication bandwidth. Some relief can be obtained by compressing the data to be uploaded or transmitted, and then decompressing it back to original format when downloading or receiving it. MPEG. which is an acronym for "Motion Picture Experts Group", has evolved as a principle international industry standard for compression and decompression of motion video and audio data. Full-screen video playback at thirty frames per second as well as CD-quality audio was an original goal.

MPEG1 revolutionized video and audio playback performance on the personal computer, becoming a standardized feature through Microsoft's Windows operating system. This gave users their first taste of the possibilities of MPEG and laid the foundation for greater heights of multimedia. The advent of the MPEG2 standard promises to expand audio and visual experiences beyond the personal computer and into everyday household appliances. By combining the "brains" of a personal computer with the entertainment features of consumer devices, a whole new breed of Entertainment personal computer products become possible.

MPEG1 technology delivers full 30 frames-per-second TV-like video and CD quality audio. MPEG1 penetrates numerous markets where VHS quality video is acceptable, achieving acceptance in education and training programs, interactive encyclopedias and action games that enhance learning and playing. In the Far East, MPEG1 fuels rich video and audio playback in VideoCD and Karaoke players. MPEG1 has made its way onto corporate intranets, the new private networks that connect employees with information using Internet connectivity. MPEG1 is a great complement to intranet-based training applications, for these clips transmit seamlessly over the bandwidth limitations of these networks. Because MPEG1 provides acceptable video and audio playback, works with standard CD players and has a familiar personal computer interface through Microsoft Windows, today's high powered PCs can achieve acceptable quality using software-only MPEG1.

MPEG2 technology can produce video images four times larger than MPEG1 for enhanced resolution that is clearer than standard TV display. MPEG2 includes theater-quality video and AC3 Surround Sound, two components in high demand from home entertainment enthusiasts. Considered the quality level of Digital Versatile Disk (DVD) products, MPEG2 achieves a higher level of performance than MPEG1. This positions MPEG2 technology as the standard for high end multimedia personal computer and consumer appliances. With DVD/MPEG2 functionality, the average personal computer is transformed into a full featured home entertainment theater.

The MPEG committee began in late 1988 with the immediate goal of standardizing video and audio for compact discs. Participation expanded to include over 200 international technical experts in video, audio, and systems, by 1992. A coded-bit language, or "syntax", emerged that approximated the perceptual quality of consumer video tape (VHS).

Demonstrations proved that the syntax was generic enough to be applied to bit rates and sample rates far higher than the original primary target application, so a second phase (MPEG2) was initiated within the committee to define a syntax for the efficient representation of interlaced broadcast video. Such is more challenging than progressive (non-interlaced) signals coded by MPEG1.

MPEG1 audio was capable of only directly representing two channels of sound. MPEG2 introduces a scheme to decorrelate multichannel discrete surround-sound audio.

The MPEG video syntax uses a few tokens to represent an entire block of sixty-four samples. MPEG also describes a decoding, or reconstruction process where the coded bits are mapped from a compact representation into the original, raw format of the image sequence. For example, a flag in the coded bitstream signals whether the following bits are to be decoded with a "DCT" algorithm, or with a prediction algorithm. The decoding process algorithms are defined by MPEG. The syntax can exploit common video characteristics such as spatial redundancy, temporal redundancy, uniform motion, spatial masking, etc.

Claims are often made that MPEG can achieve high quality video with compression ratios exceeding 100:1. But such high ratios often include oversampling factors in the source video. The coded sample rate an MPEG image sequence is usually not much larger than thirty times the specified bit rate. Subsampling pre-compression provides much of the high compression ratios for all video coding methods, including those of the non-MPEG variety.

MPEG1 and MPEG2 video syntax are useful over wide ranges of bit rates and sample rates. MPEG1 operates at thirty SIF pictures (352 pixels x 240 lines) per second, and a bit rate less than 1.86 megabits/sec, e.g., "Constrained Parameters Bitstreams", as in the Compact Disc Video (White Book). It is possible to encode picture dimensions as high as 4095 x 4095 and a bit rates up to 100 Mbit/sec. But with MPEG2, the most popular combinations have settled into levels, e.g., "low-level" SIF which is 352 pixels x 240 lines x 30 frames/sec, and "main level" CCIR 601 which is 720 pixels/line x 480 lines x 30 frames/sec. Motion Compensation displaces macroblocks from previous pictures Macroblock predictions are formed out of arbitrary 16x 16 pixel (or 16x8 in MPEG2) areas from previously reconstructed pictures.

There are no boundaries which limit the location of a macroblock prediction within the previous picture, other than the edges of the picture. Display picture size is the same as the coded picture size In MPEG, the display picture size and frame rate may differ from the size (resolution) and frame rate encoded into the bitstream. For example, a regular pattern of pictures in a source image sequence may be dropped (decimated), and then each picture may itself be filtered and sub-sampled prior to encoding. Upon reconstruction, the picture may be interpolated and up-sampled back to the source size and frame rate. In fact, the three fundamental phases, Source Rate, Coded Rate, and Display Rate, may differ by several parameters. The MPEG syntax can separately describe Coded and Display Rates through sequence_headers, but the Source Rate is known only by the encoder.

Picture coding types (I, P, B) all consist of the same macroblocks types. All macroblocks within an I-picture must be coded Intra, like a baseline JPEG picture. However, macroblocks within a P-picture may either be coded as Intra or Non-intra, temporally predicted from a previously reconstructed picture.

Macroblocks within the B-picture can be independently selected as either Intra, Forward predicted, Backward predicted, or both forward and backward (Interpolated) predicted. The macroblock header contains an element, called macroblock_type, which can flip these modes on and off like switches. The macroblock_type is a powerful part of the video syntax. Picture types (I, P, and B) enable macroblock modes by widening the scope of the semantics. The component switches are, Intra or Non-intra, Forward temporally predicted (motion_forward), Backward temporally predicted (motion_backward) (2+3 in combination represent "Interpolated"), conditional replenishment (macroblock_pattern), adaptation in quantization (macroblock_quantizer), and temporally predicted without motion compensation. The first five switches are mostly orthogonal. The sixth is derived from the first and second in P-pictures, and does not exist in B-pictures. Some switches are non-applicable in the presence of others. For example, in an Intra macroblock, all six blocks by definition contain DCT data, therefore there is no need to signal either the macroblock_pattern or any of the temporal prediction switches. Likewise, when there is no coded prediction error information in a Non-intra macroblock, the macroblock_quantizer signal would have no meaning. The sequence structure is fixed to a specific I,P,B frame pattern. A sequence may consist of almost any pattern of I, P, and B-pictures. It is common in industrial practice to have a fixed pattern, e.g. IBBPBBPBBPBBPBB. However, more advanced encoders attempt to optimize the placement of the three picture types according to local sequence characteristics. Each picture type carries a penalty when coupled with the statistics of a particular picture, e.g., temporal masking, occlusion, motion activity, etc.

Until recently, MPEG2 datastream processing was implemented primarily in hardware, using application specific integrated circuits (ASIC's). The relatively recent introduction of cost-effective microcomputers of sufficient power has sparked interest in performing this MPEG2 processing with software, as a lower-cost solution. Since the use of software for this purpose has had a relatively short life span to this point, no great body of prior art has had time to accumulate.

Digitized images require a large amount of storage space to store and a large amount of bandwidth to transmit. A single, relatively modest-sized image, having 480 by 640 pixels and a full-color resolution of twenty-four bits per pixel (three 8-bit bytes per pixel), occupies nearly a megabyte of data. At a resolution of 1024 by 768 pixels, a 24-bit color screen requires 2.3 megabytes of memory to represent. A 24-bit color picture of an 8.5 inch by 11 inch page, at 300 dots per inch, requires as much as twenty-five megabytes to represent.

Video images are even more data-intensive, since it is generally accepted that for high-quality consumer applications, images must occur at a rate of at least thirty frames per second. Current proposals for high-definition television (HDTV) call for as many as 1920 by 1080 or more pixels per frame, which translates to a data transmission rate of about 1.5 billion bits per second. This bandwidth requirement can be reduced somewhat if one uses 2:1 interleaving and 4:1 decimation for the "U" and "V" chrominance components, but 0.373 billion bits per second are still required.

Traditional lossless techniques for compressing digital image and video information, such as Huffman encoding, run length encoding and the Lempel-Ziv-Welch algorithm, are far from adequate to meet this demand. For this reason, compression techniques which can involve some loss of information have been devised, including discrete cosine transform techniques, adaptive discrete cosine transform techniques, and wavelet transform techniques. Wavelet techniques are discussed in DeVore, Jawerth and Lucier, *Image Compression Through Wavelet Transform Coding,* IEEE Transactions on Information Theory, Vol. 38, No. 2, pp. 719-746 (1992); and in Antonini, Barlaud, Mathieu and Daubechies, *Image Coding Using Wavelet Transform*, IEEE Transactions on Image Processing. Vol. 1, No. 2, pp. 205-220 (1992).

The Joint Photographic Experts Group (JPEG) has promulgated a standard for still image compression, known as the JPEG standard, which involves a discrete cosine transform-based algorithm. The JPEG standard is described in a number of publications, including the following incorporated by reference herein: Wallace, *The JPEG Still Picture Compression Standard,* IEEE Transactions on Consumer Electronics, Vol. 38. No. 1, pp. xviii-xxxiv (1992); Purcell, *The C-Cube CL550 JPEG Image Compression Processor,* C-Cube Microsystems, Inc. (1992); and C-Cube Microsystems, *JPEG Algorithm Overview* (1992).

An encoder using the JPEG algorithm has four steps: linear transformation, quantization, run-length encoding (RLE), and Huffman coding. The decoder reverses these steps to reconstitute the image. For the linear transformation step, the image is divided up into 8*8 pixel blocks and a Discrete Cosine Transform is applied in both spatial dimensions for each block. The purpose of dividing the image into blocks is to overcome a deficiency of the discrete cosine transform algorithm, which is that the discrete cosine transform is seriously non-local. The image is divided into blocks in order to overcome this non-locality by confining it to small regions, and doing separate transforms for each block. However, this compromise has a disadvantage of producing a tiled appearance (blockiness) upon high compression.

The quantization step is essential to reduce the amount of information to be transmitted, though it does cause loss of image information. Each transform component is quantized using a value selected from its position in each 8*8 block. This step has the convenient side effect of reducing the abundant small values to zero or other small numbers, which can require much less information to specify.

The run-length encoding step codes runs of same values, such as zeros, in items identifying the number of times to repeat a value, and the value to repeat. A single item like "eight zeros" requires less space to represent than a string of eight zeros, for example. This step is justified by the abundance of zeros that usually result from the quantization step.

Huffman coding translates each symbol from the run-length encoding step into a variable-length bit string that is chosen depending on how frequently the symbol occurs. That is, frequent symbols are coded with shorter codes than infrequent symbols. The coding can be done either from a preset table or one composed specifically for the image to minimize the total number of bits needed.

Similarly to JPEG, the Motion Pictures Experts Group (MPEG) has promulgated two standards for coding image sequences. The standards are known as MPEG-1 and MPEG-2. The MPEG algorithms exploit the common fact of relatively small variations from frame to frame. In the MPEG standards, a full image is compressed and transmitted only once for every twelve frames. A compression technique similar to that of the JPEG standard is typically used to compress these "reference" or "intra" frames. For the intermediate frames, a predicted frame is calculated and only the difference between the actual frame and the predicted frame is compressed and transmitted. Any of several algorithms can be used to calculate a predicted frame, and the algorithm is chosen on a block-by-block basis depending on which predictor algorithm works best for the particular block. Motion detection can be used in some of the predictor algorithms. MPEG 1 is described in detail in International Standards Organization (ISO) CD 11172.

Accordingly, for compression of video sequences, the MPEG technique is one which treats the compression of reference frames substantially independently from the compression of intermediate frames between reference frames. The present invention does not relate to the compression of still images or reference frames, it relates to the decompression of intermediate frames.

The above techniques for compressing digitized images represent only a few of the techniques that have been devised. However, none of the known techniques yet achieve compression ratios sufficient to support the huge still and video data storage and transmission requirements expected in the near future. The techniques also raise additional problems, apart from pure compression ratio issues. In particular, for real time, high-quality video image decompression, the decompression algorithm must be simple enough to be able to produce thirty frames of decompressed images per second. The speed requirement for compression is often not as extreme as for decompression, since for many purposes, images can be compressed in advance. Even then, however, compression time must be reasonable to achieve commercial objectives. In addition, many applications require real time compression as well as decompression, such as real time transmission of live events. Known image compression and decompression techniques which achieve high compression ratios, often do so only at the expense of requiring extensive computations either on compression or decompression, or both.

The MPEG-2 video compression standard is defined in ISO/IEC 13818-2 "Information technology--Generic coding of moving pictures and associated audio information: Video". MPEG-2 uses motion compensation on fixed sized rectangular blocks of pixel elements ("macroblocks") to use temporal locality for improved compression efficiency. The location of these "macroblocks" in the reference pictures is given on half pixel boundaries, and so requires an interpolation of pixel elements. Such interpolation is specified in the MPEG-2 standard, as follows:

```
case-A:
if ((!half_flag[0])&&(!half_flag[1]))
        pel_pred[y][x]=pel_ref[y+int_vec[1]][x+int_vec[0]];


case-B:
if ((!half_flag[0]&&half_flag[1])
        pel_pred[y][x]=(pel_ref[y+int_vec[1]][x+int_vec[0]]+
                        pel_ref[y+int_vec[1]+1][x+int_vec[0]])//2;


case-C:
if (half_flag[0]&&(!half_flag[1]))
        pel_pred[y][x]=(pel_ref[y+int_vec[1]][x+int_vec[0]]+
                        pel_ref[y+int_vec[1]][x+int_vec[0]+1])//2;


case-D:
if (half_flag[0]&&half_flag[1])
        pel_pred[y][x]=(pel_ref[y+int_vec[1]][x+int_vec[0]]+
                        pel_ref[y+int_vec[1]][x+int_vec[0]+1]+
                        pel_ref[y+int_vec[1]+1][x+int_vec[0]]+
                        pel_ref[y+int_vec[1]+1][x+int_vec[0]+1])//4;
```

The "//" operator at the ends of cases B, C, and D is defined in the MPEG-2 specification as: "Integer division with rounding to the nearest integer. Half-integer values are rounded away from zero unless otherwise specified.[...]". Therefore, when a two or a four are the right hand operand and the left hand operand is greater or queal zero, the operator "//" can be replaced according to: $x//2=(x+1)>>1$; $x//4=(x+2)>>2$, where ">>" denotes a binary right shift of the left hand operator by the right hand operator designated number of bits.

Since "avg($p_{00}$, $p_{01}$):=($p_{00}$+ $p_{01}$)//2=($p_{00}$+$p_{01}$+1)>>1" is a simple operation to implement on a microprocessor, many commercial microprocessors include this operation as a built-in instruction. For example, "pavgusb" is included in Intel processors with the SSE extension. and AMD processors with the 3DNow! extensions. Such instruction is very useful in computing cases B and C, above.

The built-in "pavgusb" instruction is very tempting for use in implementing case-D, e.g., by executing it twice, as in "avg(avg($p_{00}$, $p_{01}$), avg($p_{10}$, $p_{11}$))". This is also an interesting alternative for a pure hardware implementation, because the circuit to implement the first step of averaging can also be used a second time to do the second step. But to do so, will generate objectionable visual artifacts.

The usual sub-routine to implement case-D requires the execution of twenty-eight instructions, as is listed in the left column of Table I. But if "pavgusb" is used, the sub-routine can be reduced to five instructions , as is listed in the right column of Table I. So the temptation to use the quicker solution for case-D is very great.

TABLE A

| Implementation without "pavgusb" | | Implementation with "pavgusb" | |
|---|---|---|---|
| pxor | mm7, mm7 | movg | mm0, [eax] |
| movq | mm0, [eax] | pavgusb | mm0, [eax+1] |
| movq | mm1, mm0 | movq | mm1, [ebx] |
| punpcklbw | mm0, mm7 | pavgusb | mm1, [ebx+1] |
| punpckhbw | mm 1, mm7 | pavgusb | mm0, mm1 |
| movq | mm2, [eax+1] | | |
| movq | mm3, mm2 | | |
| punpcklbw | mm2, mm7 | | |
| punpckhbw | mm3, mm7 | | |
| paddw | mm0, mm2 | | |
| paddw | mm1, mm3 | | |
| movq | mm2, [ebx] | | |
| movq | mm3, mm2 | | |
| punpcklbw | mm2, mm7 | | |
| punpckhbw | mm3, mm7 | | |
| paddw | mm0, mm2 | | |
| paddw | mm1, mm3 | | |
| movq | mm2, [ebx+1] | | |
| movq | mm3, mm2 | | |
| punpcklbw | mm2, mm7 | | |
| punpckhbw | mm3, mm7 | | |
| paddw | mm0, mm2 | | |
| paddw | mm1, mm3 | | |
| paddw | mm0, [round_by_2] | | |
| paddw | mm1, [round_by_2] | | |
| psraw | mm0, 2 | | |
| psraw | mm1, 2 | | |
| packuswb | mm0, mm 1 | | |
| 28 instructions | | 5 instructions | |

One problem with the short-cut solution is that it causes artifacts because rounding is handled different than the MPEG standard dictates. So to have artifact-free implementations, the short-cut solution is prohibited.

The rounding error for a specific combination of four pixels can be calculated as:

$$err(p_{00}, p_{01}, p_{10}, p_{11})=$$

$$((((p_{00}+p_{01}+1)>>1)+((p_{10}+p_{11}+1)>>1)+1)>>1)-$$

$$((p_{00}+p_{01}+p_{10}+p_{11}+2)>>2)$$

The overall error is only affected by the two least significant bits of each coefficient, so the total average error can be calculated as:

$$avgerr = \frac{\sum_{i=0}^{3}\sum_{j=0}^{3}\sum_{k=0}^{3}\sum_{l=0}^{3} err(i,j,k,l)}{4 \cdot 4 \cdot 4 \cdot 4} = \frac{3}{8}$$

The rounding error is less than one least-significant-bit for first-generation compensation, and is not a problem. But the MPEG-2 standard allows for multi-generation compensation. The consequence of this is that a predicted picture can be used as a reference picture for successive pictures. When a predicted picture is used as a reference picture, rounding errors can add up to more than one least significant bit, and the accumulated rounding errors can be large enough over several compensation generations to create objectionable visual artifacts.

Such visual artifacts or optical effects are called "pumping", and are perceived by the eye as image brightening over a series of predicted pictures that jump back to normal brightness at the next intra-picture. In particular, sequences that have an unusually high number of predicted pictures between intra codes pictures can experience serious pumping. For example, field structure encoded sequences or material that lack "bidirectional" predicted pictures will suffer from pumping.

## SUMMARY OF THE INVENTION

The invention provides a method and apparatus that offers optimal handling of high bandwidth streaming data in a computer system. An overall objective in such a system is to minimize computational activities and thereby achieve maximal performance. This result is accomplished in the invention described herein by minimizing the amount of memory copying and also by minimizing the number of allocations and deallocations of objects.

Memory copying is a CPU/bandwidth intense operation when there is high speed streaming data on the input. The allocation and deallocation of objects is a system resource intense activity and requires a very significant amount of CPU processing per invocation in a computing device. Using a combination of techniques, the invention provides a technique that reduces both the number of memory copies as well as the number of objects which get allocated and deallocated during the course of operating on the streaming media data.

In the preferred embodiment of the invention, a word-wise search is performed. Such strategy requires the same number of clock cycles as a byte-wide search, but involves one-half as many addresses, thereby cutting execution time in half. For every start code, either the first or second byte is on a word boundary, so that by searching the data twice, first for the 0x00 0x00 word, then again for the 0x00 0x01 word, every start code in the data can be found (each successful search "hit" requires an examination of the neighboring bytes to insure that it is really a start-code, but the rules are simple and can be coded efficiently). There are normally no wait states in the second search because the second search will be executed out of the machine's data cache (if it has one).

The invention provides an algorithm that is more efficient at start code scanning than either of the two above-cited techniques, even when they are coded in assembly language. The CPU time made available by the efficiency of this algorithm allows the processor to handle other tasks, thereby allowing a more complex and rich product to be deployed on machines of given processing power. For example, the invention makes more CPU time available to make it easier to implement such features as software picture-within-picture, visually powerful but CPU-intensive Sarnoff video effects, simultaneous view and record, interactive Web access, background Electronic Program Guide (EPG) processing, HDTV video rendering, and software motion compensation.

A pre-parser of the present invention is used to create a secondary datastream to parallel a MPEG2 datastream for decoding. The parallel secondary datastream describes the structure of the MPEG2 datastream in an efficient and easy-to-use manner and helps to eliminate duplication of the parser task in various decoder stages. The pre-parser divides MPEG2 datastream inputs into samples of convenient length. Each such sample is then characterized in the secondary datastream as to type and length. Such characterizations assist in the decoding and rendering of MPEG2 datastreams and eliminate parsing redundancy.

The invention also comprises a method wherein two-step motion prediction errors for MPEG-2 interpolation case-D are corrected. An improved MPEG-2 decoder includes a logic gate, multiplexer, and adder. When both the horizontal ($h_0$) and vertical ($h_1$) motion vector components require a half pixel interpolation (case-D), the multiplexer forwards the constant minus three to the adder, otherwise a constant zero is used. Such adder modifies the DC coefficient input to the inverse discrete cosine transformer to include a correction term for the predicted pixels calculated by a two-step predictor. A correction value of -0.375 is evenly distributed over all sixty-four resulting spatial coefficients during the inverse discrete cosine transform. This results statistically in a slightly brighter set of correction terms. Such offsets a slightly darker prediction that are formed by the two-step predictor. The output frames are statistically correct images.

## BRIEF DESCRIPTION OF THE DRAWINGS

Fig. 1 is a block schematic diagram of a system for processing streaming data that uses few allocations of objects and that makes many copies of such objects;

Fig. 2 is a block schematic diagram of a system for processing streaming data that uses many allocations of objects and that makes few copies of such objects;

Fig. 3 is a block schematic diagram of a system for optimal handling and manipulation of high-speed streaming data in a computing device according to the invention;

Fig. 4 is a block schematic diagram of a transport handler minicore for optimal handling and manipulation of high-speed streaming data in a computing device according to the invention;

Figs. 5a to 5m provide an example of a start code scanner according to the invention;

Fig. 6 is a functional block diagram of an MPEG2 system embodiment of the present invention;

Fig. 7 A is a diagram of the 16-bit descriptor word used in the system of Fig. 5 for the basic payload type of MPEG2 sample;

Fig. 7 B is a diagram of the 16-bit descriptor word used in the system of Fig. 5 for other than the basic payload type of MPEG2 sample;

Fig. 7 C is a diagram of the 16-bit descriptor word used in the system of Fig. 5 for notifications;

Fig. 8 represents an MPEG2 sample and a corresponding descriptor array.

Fig. 9 is a functional block diagram of an MPEG-2 video decoding processor; and

Fig. 10 is a functional block diagram of an MPEG-2 video decoder embodiment of the invention that includes dual-step half-pixel prediction.

## DETAILED DESCRIPTION OF THE INVENTION

As discussed above, heavy use of memory copying and/or heavy use of allocation and deallocation of software objects have been the traditional software engineering approaches to solving the problem of processing streaming data.

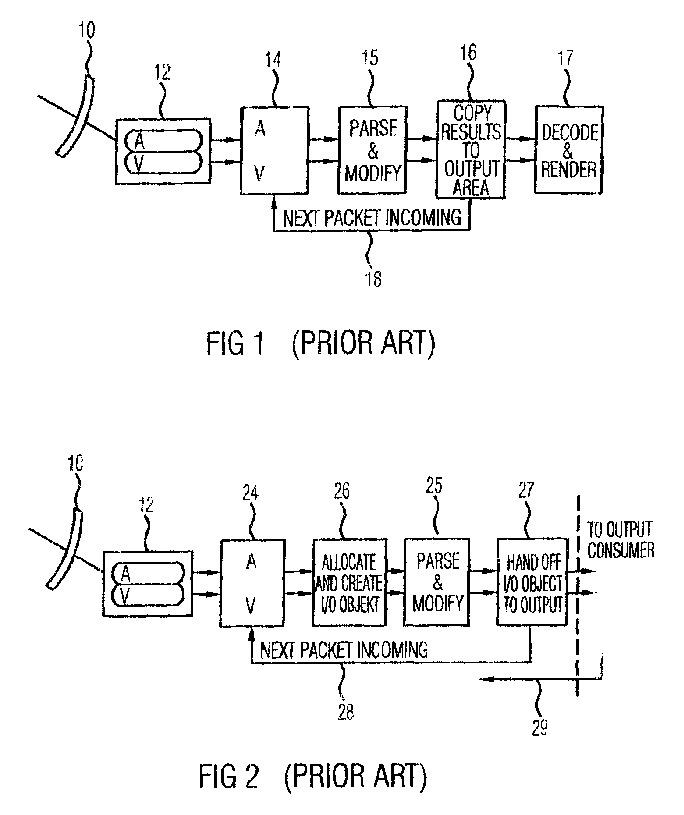

Fig. 1 is a block schematic diagram of a system for processing streaming data that uses few allocations of objects and that makes many copies of such objects. As shown in Fig. 1, a satellite antenna 10 receives streaming data in the form of a broadcast signal. The signal is provided to a driver 12 and thence to a memory 14.
The incoming data are allocated and copied to the memory. The data are read from memory and processed by a module 15 that parses and modifies the data as necessary for use in the system. The results of the parse and modification step are copied to a memory output area 16 and thence decoded and rendered by a module 17 for use in the system. Once a data packet is processed, the system is alerted to begin processing the next incoming packet 18 and the process repeats.
It can be seen that the foregoing approach is memory intensive.
Fig. 2 is a block schematic diagram of a system for processing streaming data that uses many allocations of objects and that makes few copies of such objects. As shown in in Fig. 2, a satellite antenna 10 receives streaming data in the form of a broadcast signal. The signal is provided to a driver 12 and thence to a memory 24 which maintains a local copy of the incoming data. The system includes a module 26 that allocates and creates an I/O object of the incoming data, which is then parsed and modified 25. Once processing is completed, the I/O object is handed off 27 to an output consumer (not shown). The consumer uses the output data and the advises the system that it is finished with the I/O object at which point the object is deallocated and destroyed. Thereafter, the system is alerted to begin processing the next incoming packet 28, at which point the process is repeated.

It can be seen that the foregoing approach requires a significant amount of object allocation/deallocation.

The invention provides a method and apparatus that offers optimal handling of high bandwidth streaming data in a computer system. An overall objective in such a system is to minimize computational activities and thereby achieve maximal performance. This result is accomplished in the invention described herein by minimizing the amount of memory copying and also by minimizing the number of allocation and deallocations of objects which occur.

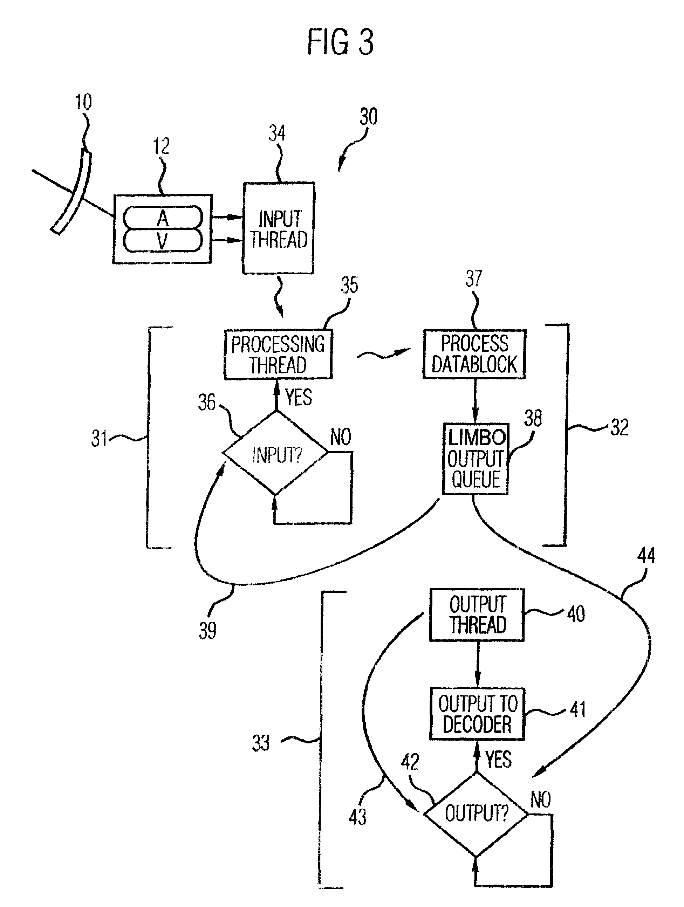

Fig. 3 is a block schematic diagram of a system for optimal handling and manipulation of high-speed streaming data in a computing device according to the invention. The techniques that are employed by the system disclosed herein to reduce the number of memory copies and the number of objects allocations/deallocations while processing streaming data include:

- Using memory reference objects rather than copies of memory whenever possible. These memory reference objects are referred to herein as data blocks.

- The use of up to four separate queues or lists which contain lists of references to the data blocks. The four queues are an:

  a) *Idle* queue 30 which is used to keep a cache of currently unused data block objects. This facilitates recycling objects to minimize the allocation and deallocation of these data block objects;

  b) *Input* queue 31 which is used as a holding area for incoming data blocks until each block can be processed;

  c) *Limbo* queue 32 which is used for localized streams which are larger than a single data block that needs to be held for further global processing prior to being placed in the output queue; and

  d) *Output* queue 33 which is the queue which holds the resultant data blocks after they are processed from input to limbo and finally placed into the output queue. When a data block is taken from the output queue and its resultant data is sent to the decoder or post processing unit, the data block is placed back onto the idle queue for reuse. The data block is not deallocated at this point.

- Segmented processing duties via multithreading. Three separate processing threads are used to facilitate separation of duties. There is an:

  a) Input thread 34 which takes incoming data from the streaming media source and makes a data block by pulling a data block from the idle queue, assigns referenced memory pointers to the incoming data, and then places the new data block onto the input queue;

  b) Processing thread 35 which takes data blocks from the input queue and processes the block by parsing and/or modifying the data as necessary to prepare the data block for output. If it is determined 36 that all of the required information for a localized stream of data is not fully contained in a single data block, then the data block is placed in the limbo queue 37, 38 until the localized stream is complete 39. When a localized stream is completely processed, the data blocks which makeup the localized fully processed stream are moved to the output queue 44; and

  c) Output thread 40 which is responsible for taking data blocks from the output queue and which provides a module 41 for handing the resultant data to the downstream processing unit, which in the preferred embodiment is usually a digital audio/video decoder. The corresponding data block is then placed back on the idle queue 42, 43 for use again by an incoming data packet/stream.

This completes the circle of recycling object usage, thereby reducing the allocation and deallocation of objects to nearly zero. The only cases where data block objects are allocated is when there is a request to get a data block from the idle queue when the idle queue is empty. The only time when a data block is deallocated during processing is if there are a very large number of data block objects which are on the idle queue for a long period of time. Deallocation of one or more of these idle data blocks must be handled carefully so as to not create hysteresis, whereby allocation and deallocation occurs frequently due to the cyclic nature of the incoming data packets. However, this is mostly an implementation concern and does not affect the operation of the invention.

Complexity of the invention is minimized by use of the three separate threads which have separate and specific duties. Memory copies are minimized by only making reference to the incoming streaming data packets rather than copying the incoming data. The data block object is a very small object which describes where the input data is found, how big the input data is, and where the output/resultant data is post-processed, as well as the status of each of these input and output memory references. It is possible to have situations where the input and/or output are at times actually allocated and/or copied. These are the exception rather than the rule, but the responsibility for keeping track of such events lies with the data block object itself.

Allocation and deallocation of data blocks is reduced to near-zero by use of the idle queue as an object recycling center. This is a very powerful concept for a streaming application because data are always coming in, being processed, and being output. The constant movement of data makes this concept very valuable.

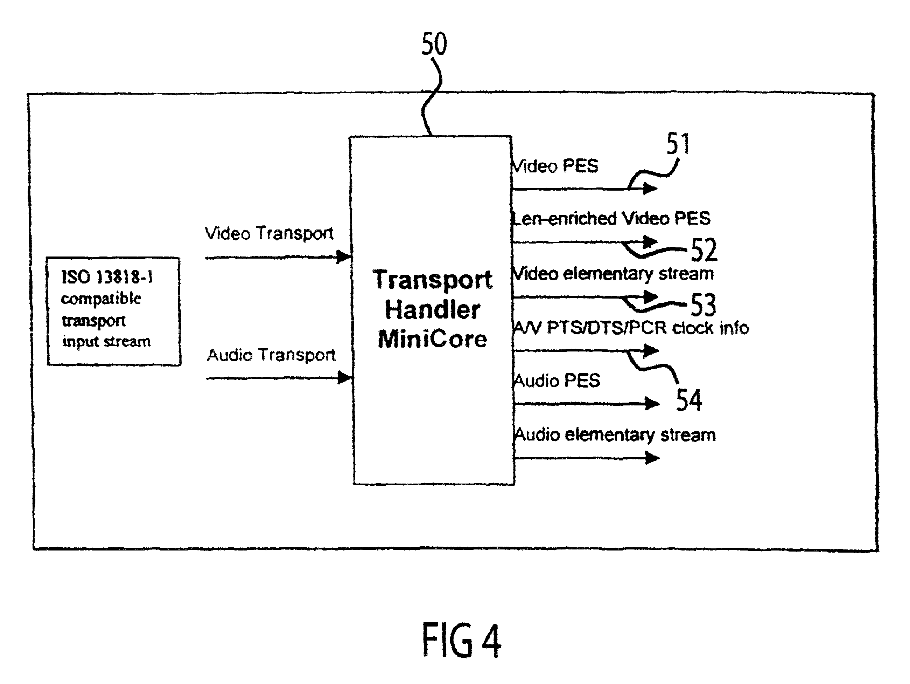

Fig. 4 is a block schematic diagram of a transport handler minicore 50 for optimal handling and manipulation of high-speed streaming data in a computing device according to the invention. The following discussion describes a presently preferred architectural approach for handling ISO 13818-1 (See www.mpeg.org, www.ansi.org (ISO 13818-1)) transport streams in software and for translating these transport streams into various formats of MPEG streams according to the invention.

This embodiment of the invention finds application in the area of satellite and terrestrial broadcast transport. A major function of the minicore is to receive ISO 13818-1 transport stream packets as an input, *i.e.* the DVB transport stream and translate these packets into other useful MPEG formats at the user's request. The minicore also provides timestamp and clock reference information to the consumer of this information on a side-interface which correlates this clock information to the audio and video data streams on the output interfaces.

The transport minicore provides on its output interfaces:

- PES 51 with zero-length PES headers in the case of DVB video PIDs.

- Length-enriched PES 52, reconstituted to contain length fields for all PES packets regardless of input payload length and 64k/16bit length field limitations.

- Elementary stream 53 with all extraneous packetization removed.

- Parsed/validated presentation time stamps, decode time stamps, transport clock references 54 (SCR/PCR).

- Correlation of clocking information to audio stream and video stream byte indices.

These interface outputs and input of transport data are provided in the preferred embodiment of the invention as a Microsoft Visual C++ ".lib" file, ".h" header file, and ".dll" file.

## EXAMPLE

The following tables are source code listings of a C++ implementation of a preferred embodiment of the invention.

Table B is a source code listing of a C++-specific buffer that is recycled for processing data blocks from an input queue and that puts these data blocks on an output queue after processing.

**Table B.  Recycled Buffer Processing Source Code Listing**

```
// DataBlock.cpp: implementation of the CDatablockclass.
//
//////////////////////////////////////////////////////////////
#include "DataBlock.h"
#define PESHEADERSIZE 32        // This is a maximum conservative value.
//////////////////////////////////////////////////////////////
// Construction/Destruction
//////////////////////////////////////////////////////////////
void HexAsciiDump(char* pdest, char* psrc, int len)
{
        int I, line. len_cur;
        char dat[5];
        char linebuf[100];
        assert(len < 200);              // Sane value
        strcpy(pdest. "HA-Dump:");
        for (line=0;line<=len/16;line++)
        {
```

```
                        len_cur = 16:
                        if (line*16 + 16 >= len)
                                len_cur = len % 16;
                        linebuf[0] = 0;
                        for (i=0 ; I<len_cur ; i++)
                        {
                                sprintf(dat, "%02x ", (unsigned char)psrc[line*16 + I]);
                                strcat(linebuf, dat);
                        }
                        strcat(linebuf, " : ");
                        strcat(pdest, linebuf);
                        for (i=0 : I<len_cur ; i++)
                        {
                                if (isalpha(psrc[line*16 + I]))
                                {
                                        sprintf(dat, "%c", psrc[line*16 + I]);
                                        strcat(pdest, dat);
                                }
                                else
                                {
                                        strcpy(dat, ".");
                                        strcat(pdest, dat);
                                }
                        }
                        strcat(pdest, "\n        ");
                }
                strcat(pdest, "\n"):
        }
CDataBlockList::CDataBlockList()
        {
        }
CDataBlockList::~CDataBlockList()
        {
                while(!IsEmpty())
                        delete RemoveHead();
```

```
 }
POSITION CDataBlockList::AddBlock(CDataBlock* ptr)
{
        return AddTail(ptr);
}
CDataBlock* CDataBlockList::RemoveHead()
{
        assert(!IsEmpty());
        if (IsEmpty())
                return NULL;
        else
                return (CDataBlock*)CPtrList::RemoveHead();
}
CDataBlock::CDataBlock(CCircularBuff* p_bin, CCircularBuff* p_bout,
QI_InputStreamType it, QI_OutputStreamType ot)
{
        assert(p_bin);
        assert(p_bout);
        assert(it>InvalidMinIT && it<InvalidMaxIT);
        assert(ot>InvalidMinOT && ot<InvalidMaxOT);
        fp_dump=NULL;
        prev_cont = 0xff;               // forgive next one to get back in sync.
        p_copy_lasttrans = NULL;
        p_copy_curtrans = NULL;
        p_copy_nexttrans = NULL;
        p_circ_in  = p_bin;
        p_circ_out = p_bout;
        in_type = it;
        out_type = ot;
        p_data_in = NULL;
        len_data_in = 0;
        p_data_out = NULL;
        len_data_out = 0;
        p_curout = NULL;
        p_ancillary_start = NULL;
```

```
        p_ancillary_cur = NULL;
        num_ancillary = 0;
        tp = NULL;
        index = 0;
        PES_length = 0;
        scrambling_control = 0;
        data_alignment_indicator = 0;
        PTS_DTS_flags = 0;
        PTS = 0;
        DTS = 0;
        bLookingForSync = FALSE;
        lastAncillary = InvalidMinAT;
}
CDataBlock::~CDataBlock()
{
        if (fp_dump)
                fclose(fp_dump);
        DeleteTempTrans();
}
int CDataBlock::InputCopy(char * p_in, unsigned long len)
{
        // This function should only be called ONCE for an input block of data to
process.
        assert(!p_data_in);
        p_data_in = p_circ_in->GetMemoryBlock(len);
        len_data_in = len;
        if (!p_data_in)
                return QI_NO_MEMORY;
        // Now that we have an input buffer for it, copy the data.
        memcpy(p_data_in, p_in, len);
        // The output side allocations will be delayed until processing of the data
actually takes place.
        return QI_OK;
}
//
```

```
// Here is the meat of the matter. This function is the one that handles the parsing
// control of the input buffer. It then copies out data to the output buffer.
//
void CDataBlock::ProcessBlock()
{
        int I, num_packets;
        unsigned char* p_packet;
        unsigned char* p_payload_start;
        unsigned int payload_length;
        SetupOutputBuffer();
        disc_errors = 0;
        p_packet = p_data_in;
        num_packets = len_data_in / TRANSPORT_SIZE;
        for (i=0; I<num_packets; i++, p_packet += TRANSPORT_SIZE)
        {
                SYNC_index = -1;
                lastAncillary = InvalidMinAT;
                p_payload_start = ParseTransport(p_packet, &payload_length);
                if (IsErrBitSet(aBadSyncByte47))
                {
                        continue;
                }
                // Tally discontinuity errors for this block. Upstream may want this for
statistical info.
                if (IsErrBitSet(aDiscontinuity))
                        disc_errors++;
                // Do some kind of CC and "debug" if we have NO payload *OR*
                // if we actually have a real discontinuity error.
                if (payload_length==0 || lastAncillary==aDiscontinuity)
                {
                        DumpDataBlock(p_data_in, I, num_packets, lastAncillary);
                        DeleteTempTrans();
                        // If we have a current AND a "last" then we copy both.
                        p_copy_curtrans = new unsigned char[TRANSPORT_SIZE];
                        assert(p_copy_curtrans);
```

```
                    memcpy(p_copy_curtrans, p_packet, TRANSPORT_SIZE);
                    // Now copy the last packet. (if we have one ... I>0)
                    if (I>0)
                    {
                            p_copy_lasttrans = new unsigned
char[TRANSPORT_SIZE];
                            assert(p_copy_lasttrans);
                            memcpy(p_copy_lasttrans, p_packet-
TRANSPORT_SIZE, TRANSPORT_SIZE);
                    }
                    // Do we have a "next" one to look at too?
                    if (I<num_packets-1)
                    {
                            p_copy_nexttrans = new unsigned
char[TRANSPORT_SIZE];
                            assert(p_copy_nexttrans);
                            memcpy(p_copy_nexttrans,
p_packet+TRANSPORT_SIZE, TRANSPORT_SIZE);
                    }
            }
            // Check out lastAncillary for information on why payload_length=0.
            // If aRepeatPacket, check out p_copy_lasttrans and p_copy_curtrans
            assert(/*payload_length && */payload_length<185);
            // If this packet is ONLY ancillary data or stuffing, we will have no
payload.
            if (p_payload_start && payload_length)
            {
            if (!bLookingForSync)
            {
                    memcpy(p_curout, p_payload_start, payload_length);
                    p_curout += payload_length;
                    len_data_out += payload_length;
            }
            else
            {
```

17

```
if (SYNC_index == -1)
{
        // Drop all data until a video sequence is found.
}
else
{
        // Found seq. Copy "remainder".
        memcpy(p_curout, tp+SYNC_index,
TRANSPORT_SIZE - SYNC_index);
        p_curout += TRANSPORT_SIZE -
SYNC_index;
        len_data_out += TRANSPORT_SIZE -
SYNC_index;
        bLookingForSync = FALSE;
}
        }
        }
}
// haywire check.
assert(len_data_out < (len_data_in+PESHEADERSIZE));
FixupAncillaryPointers();
}
void CDataBlock::SetupOutputBuffer()
{
unsigned long len_out;
        //
        // Output is always guaranteed to be smaller or equal to input EXCEPT in the
        // case of Length_Enriched_PES which might have extra manufactured PES
packets
        // inserted in the output which will "stretch" the size. However. even in
        // this mode, there are a minimum of 4 bytes which are shrunk per 188 bytes
        // of input which means that a "short" PES packet of about 20 bytes is
        // gained for every 5 transport packets at least (5packets * 4bytes/packet = 20 bytes)
        // By allocating one extra "large" pes header worth of data. we insure ourselves
        // from overflow even in the case of a single packet incoming.
```

```
//
len_out = len_data_in + PESHEADERSIZE;
p_data_out = p_circ_out->GetMemoryBlock(len_out);
if (!p_data_out)
{
        assert("No output pointer given??"==NULL);
        return;
}
p_curout = p_data_out;
// Ancillary data gets laid down in "array" fashion at the end of the
// data_out buffer. When the scan is complete, we know how big the ancillary
// data is and will do a "fixup" where we request
GetMemoryBlock(ancillary_len)
// and then continue.
p_ancillary_start = p_data_out + len_out;
p_ancillary_cur = p_ancillary_start;
num_ancillary = 0;
}
//
// The ancillary data has been laid down in the memory block just past the output
buffer
// during the parsing operations. Since we never know how many ancillary data items
will
// be found, we are cheating the circular buffer by not asking for the memory until
AFTER
// we've already laid data down in the spot that we want it. During the laydown
process,
// the end-of-buffer/wrap condition is checked for and if this occurs, all the ancillary
// data is moved to the beginning of the circular buffer and the pointers are reset
// to reflect this change.
//
// The only thing that needs to be guaranteed here is that no one does a
GetMemoryBlock()
// during the time while we are processing the block. Since this is an "atomic"
operation,
```

```
// there should be no problem.
//
// So, when the block is completely parsed, we know how much ancillary data there is and
// therefore how much memory to request from p_circ_out for the memory space. If all is
// well, we'll get the memory pointer from the request where we already started laying
// down the data.
//
void CDataBlock::FixupAncillaryPointers()
{
        unsigned char* p_buffreturned;
        p_buffreturned = p_circ_out->GetMemoryBlock(num_ancillary *
sizeof(QI_ANCILLARY_DATA));
        assert(p_buffreturned);
        assert(p_buffreturned == p_ancillary_start);
}
unsigned char* CDataBlock::ParseTransport(unsigned char * p_packet, unsigned int*
p_payload_len)
{
BOOL bpayload_unit_start;
WORD PID;
unsigned char* p_temp_tp;
unsigned char Scrambled;
unsigned char cont_count;
unsigned char adap_field;
        ErrBits = 0;
        tp = p_packet;
        index = 0;
        *p_payload_len = 0;
        if (tp[index++] != 0x47)
        {
                MakeAncillary(aBadSyncByte47, 0x00,
QI_DISC_BAD_SYNCBYTE);
                lastAncillary = aBadSyncByte47;
```

```
//                  assert("No SyncByte 0x47 in transport packet"==NULL);
                    // With no sync byte, it is unsafe to continue.
                    return NULL;
          }
          if (tp[index] & 0x80)
                    MakeAncillary(aDiscontinuity, 0x01, QI_DISC_TRANSERROR);
          // Dont forget to make an ancillary for this later if it is true.
          bpayload_unit_start = (tp[index] & 0x40) >> 6;
          // 13 bits constitute the PID.
          PID = ((tp[index++] << 8) | tp[index++]) & 0x1fff;
          if (PID==0x1fff)
          {
                    MakeAncillary(aStuffingPacket, 0x01, 0x00);
                    lastAncillary = aStuffingPacket;
                    // make message for this discarded "stuffing packet" ??
                    return NULL;
          }
          Scrambled = (tp[index] & 0xc0) >> 6;
          if (Scrambled)
          {
                    // Packet is scrambled.
                    MakeAncillary(aScrambled, index, 0x00);
          }
          // 0x11 and 0x10 tell us that the adaptation field is indeed present.
          adap_field = tp[index] & 0x30;
          cont_count = tp[index++] & 0x0f;
          if (adap_field & 0x20)
                    ParseAdaptationField();
          // 0x01 and 0x11 indicate that payload is present.
          // 0x10 is adaptation field only. 0x00 is reserved.
          if (!(adap_field & 0x10))
          {
                    MakeAncillary(aNoPayload, index, 0x00);
                    lastAncillary = aNoPayload;
                    // No payload in this packet.
```

```
                              return NULL;

                    }
//#if 0
          // Continuity counter check. It should advance modulo 0x0f in all cases
          // except when there are:
          // 1. Repeat packets (stays the same)
          // 2. If there is no payload (already skipped out anyway)
          if (prev_cont==0xff)
                    prev_cont = cont_count;
          else
          {
                    if (prev_cont == cont_count)
                    {
                              // Repeated transport packet. Ignore it.
                              lastAncillary = aRepeatPacket;
                              return NULL;
                    }
                    else
                    {
                              if ( ((prev_cont+1)%0x10) == cont_count )
                                        prev_cont = cont_count;
                              else
                              {
                                        // Continuity error
                                        prev_cont = 0xff;           // forgive next one to get
back in sync.
                    }
                              MakeAncillary(aDiscontinuity, index-1,
QI_DISC_CONTCOUNTER);
                              lastAncillary = aDiscontinuity;
                              // Go ahead and let this packet go through. It is probably
good.
                              // It is important to RECOGNIZE it up top though. Do
not "return NULL;" here.
                              bLookingForSync = TRUE;   // Now we should skip
payload data until a new SEQ header.
```

```
                    }
              }
        }
//#endif
     if (Scrambled)
     {
           MakeAncillary(aScrambled, index, 0x00);
           lastAncillary = aScrambled;
           // Cannot deal with payload in scrambled packets. Kick out with no
payload.
           return NULL;
     }
     if (bpayload_unit_start)
     {
           MakeAncillary(aPESHeader, index, 0x00);
           // Now deal with the payload
           assert(tp[index]==0x00 && tp[index+1]==0x00 &&
tp[index+2]==0x01 && tp[index+3]>0xbc);
           // Mark down where we are as we'll want to "backup" in PES situations
after parsing is complete.
           p_temp_tp = tp + index;
           ParsePESHeader();
           assert(scrambling_control==0x00);   // What to do? Does this conflict
with transport scrambling control?
           switch(out_type)
           {
           case ES:
                 // Write out starting at tp as this is the beginning of the ES
payload.
                 *p_payload_len = TRANSPORT_SIZE - index;
                 return tp + index;
           case PES:
                 // PES or LengthRichPES
                 // if LengthRichPES, we need to "tag" this REAL header for
later use with
```

```
                    // the length enriching game.
                    //
                    // If it is just PES, then use the pre-parsing tp pointer to
calculate length and start.
                    *p_payload_len = TRANSPORT_SIZE - (p_temp_tp -
p_packet);
                    return p_temp_tp;
            case TS:
                    break;
            default:
                    assert(FALSE);
                    return NULL;
            }
        }
        else
        {
            switch(out_type)
            {
            case ES:
            case PES:
            case LengthRichPES:
                    // Payload is just payload of PES.
                    *p_payload_len = TRANSPORT_SIZE - index;
                    return tp + index;
            case TS:
                    *p_payload_len = TRANSPORT_SIZE;
                    return p_packet;
            default:
                    assert(FALSE);
                    return NULL;
            }
        }

        assert(FALSE):
        return NULL:
```

```
}
void CDataBlock::ParseAdaptationField()
{
int adapt_len;
unsigned char disc_ind, random_access, es_priority, PCR_flag;
//unsigned char OPCR_flag, splicing_point, private_data, adapt_extension;
unsigned char* p_payloadnext;
DWORDLONG PCRb, PCRx;
        adapt_len = tp[index++];
        if (!adapt_len)
                return;
        p_payloadnext = tp + index + adapt_len;          // With non-zero length,
need this for later.
        disc_ind            = tp[index] & 0x80;
        random_access       = tp[index] & 0x40;
        es_priority         = tp[index] & 0x20;
        PCR_flag            = tp[index] & 0x10;
//      OPCR_flag           = tp[index] & 0x08;
//      splicing_point = tp[index] & 0x04;
//      private_data   = tp[index] & 0x02;
//      adapt_extension     = tp[index] & 0x01;
        index++;
        if (disc_ind)
                MakeAncillary(aDiscontinuity, index-1, QI_DISC_ADAPT_FIELD);
        if (PCR_flag)
        {
                // Breakdown is: 33 bits are PCRb followed by 6 reserved bits
followed by 9 bits of PCRx
                // <<8 makes resultant byte [15..8]
                // <<16 makes resultant byte [23..16]
                // <<24 makes resultant byte [31..24]
                PCRb = (tp[index]<<25) | (tp[index+1]<<17) | (tp[index+2]<<9) |
(tp[index+3]<<1) | (tp[index+4]&0x80);
                PCRx = ((tp[index+4]&0x01)<<8) | tp[index+5];
                MakeAncillary(aPCRb, index, PCRb);
```

```
            MakeAncillary(aPCRx, index, PCRx);
            index += 6;
    }
    // We're going to ignore the OPCR, splicing point, private data, and
extensions. So, we can just
    // comment out this chunk of code to the end.
/* Ignoring fields that we dont care about.
    if (OPCR_flag)
    {
            // Breakdown is: 33 bits are PCRb followed by 6 reserved bits
followed by 9 bits of PCRx
            // <<8 makes resultant byte [15..8]
            // <<16 makes resultant byte [23..16]
            // <<24 makes resultant byte [31..24]
    //          PCRb = (tp[index]<<25) | (tp[index+1]<<17) | (tp[index+2]<<9) |
(tp[index+3]<<1) | (tp[index+4]&0x80);
    //          PCRx = ((tp[index+4]&0x01)<<8) | tp[index+5];
    //          MakeAncillary(aPCRb, index, PCRb);
    //          MakeAncillary(aPCRx, index, PCRx);
            index += 6;
    }
    // Ignoring splicing point countdown.
    if (splicing_point)
            index++;
    if (private_data)
            index += (1 + tp[index]);      // Jump past length byte plus private data
bytes too.
    if (adapt_extension)
            index += (1 + tp[index]);      // Jump past length of extension plus the
extension bytes too.
*/
            index = p_payloadnext - tp;    // Skips stuffing bytes etc by previous
calculation.
}
void CDataBlock::ParsePESHeader()
```

```
{
    unsigned char tmp;
    DWORD dw_tmp;
    unsigned char ESCR_flag, ES_rate_flag, DSM_trick_mode_flag;
    unsigned char add_copy_info_flag, PES_CRC_flag, PES_extensions_flag;
    unsigned char* p_payload_start_actual;
    int PES_header_length;
    dw_tmp = (tp[index]<<16) | (tp[index+1]<<8) | tp[index+2];
    index += 3;
    assert(dw_tmp==0x000001);
    // Grab the stream ID from the header
    tmp = tp[index++];
    switch(in_type)
    {
    case VideoTS:
        assert(tmp>=0xe0 && tmp<=0xef);
        break;
    case AudioTS:
        assert(tmp>=0xc0 && tmp<=0xdf);
        break;
    default:
        assert(FALSE);
        break;
    }
    PES_length = (tp[index++]<<8) | tp[index++];
    // Begin bit-parsing
    assert( (tp[index] & 0xc0)==0x80 );           // Looking for "10" in binary for
markerbits
    scrambling_control = (tp[index] & 0x30) >> 4;        // nonzero result means
scrambled.
    data_alignment_indicator = tp[index++] & 0x04;     // Nonzero indicates
payload starts with "interesting" data.
    // Next bitflag byte.
    PTS_DTS_flags = (tp[index] & 0xc0) >> 6; // 00=none. 01=illegal. 10=PTS,
11=PTS+DTS
```

```
ESCR_flag =  tp[index] & 0x20;
ES_rate_flag = tp[index] & 0x10;
DSM_trick_mode_flag = tp[index] & 0x08;
add_copy_info_flag = tp[index] & 0x04;
PES_CRC_flag = tp[index] & 0x02;
PES_extensions_flag = tp[index++] & 0x01;
// PES header length next.
PES_header_length = tp[index++];
assert(PES_header_length);
// Now save off our current position for later calculations.
p_payload_start_actual = tp + index + PES_header_length;
if (data_alignment_indicator)
{
        if (in_type==VideoTS && p_payload_start_actual[0]==0 &&
p_payload_start_actual[1]==0 && p_payload_start_actual[2]==1)
        {
                // Search for start code??
                if (p_payload_start_actual[3]==0xb3)
                {
                        // SYNC_index "set" must happen PRIOR to
MakeAncillary call or else the
                        // "find" will not get recorded if we are in
bLookingForSync mode.
                        SYNC_index = index+PES_header_length;
                        MakeAncillary(aVidSEQ. index+PES_header_length,
0xb3);
                }
        }
        if (in_type==AudioTS)
        {
                if (p_payload_start_actual[0]==0xff &&
(p_payload_start_actual[1]&0xf0)==0xf0)
                {
                        // SYNC_index "set" must happen PRIOR to
MakeAncillary call or else the
```

```
                                // "find" will not get recorded if we are in
bLookingForSync mode.
                                SYNC_index = index+PES_header_length;
                                MakeAncillary(aAudFrameStart,
index+PES_header_length, 0xfff);
                        }
                }
        }
        // Parse PTS and/or DTS.
        if (PTS_DTS_flags & 0x02)
        {
                // PTS only 0010 [32..30] 1
                // PTS+DTS PTS portion 0011 [32..30] 1
                if (PTS_DTS_flags==2)        // PTS only.
                        PTS = ParseTS_40(0x21);
                else
                        PTS = ParseTS_40(0x31);
                if (!PTS)
                {
                        // Could be BIG trouble. Marker bits were not set. Skip the rest
of the header
                        // assuming it to be bad.
                        index = p_payload_start_actual - tp;
                        return;
                }
                MakeAncillary(aPTS, index-5, PTS);
        }
        if (PTS_DTS_flags == 0x03)
        {
                // PTS+DTS DTS portion 0001 [32..30] 1
                DTS = ParseTS_40(0x11);
                if (!DTS)
                {
                        // Could be BIG trouble. Marker bits were not set. Skip the rest
of the header
```

```
                                  // assuming it to be bad.
                                  index = p_payload_start_actual - tp;
                                  return;
                          }
                          MakeAncillary(aDTS, index-5, DTS);
                  }
          // The order of "parsing" for the rest of the items is:
          // ESCR
          // ES_rate
          // DSM_trick_mode
          // additional_copy_info
          // PES_CRC
          // PES_extensions { a bunch inside here }
          // stuffing bytes
          // Since we dont care about any of these items, we'll just skip to the real
payload at this point.
          index = p_payload_start_actual - tp;
          return;
  }
  DWORDLONG CDataBlock::ParseTS_40(unsigned char checkbits)
  {
          DWORDLONG TS;
          TS = 0;
          // Check marker bits in first byte.
          // PTS only 0010 [32..30] 1
          // PTS+DTS PTS portion 0011 [32..30] 1
          // PTS+DTS DTS portion 0001 [32..30] 1
          if ( (tp[index] & 0xf1) != checkbits) // xxxx [32..30] x
          {
                  assert(FALSE);
                  return 0;
          }
                  // Check other marker bits
          if ( (tp[index+2] & 0x01) != 0x01 || (tp[index+4] & 0x01) != 0x01)
                  {
```

```
        assert(FALSE);
        return 0;
    }
    TS = (tp[index] & 0x08) >> 3;        // 33rd bit.
    TS = (TS << 1) | (tp[index++] & 0x06) >> 1;
    TS = (TS << 8) | tp[index++];
    TS = (TS << 7) | ( (tp[index++] & 0xfe) >> 1);
    TS = (TS << 8) | tp[index++];
    TS = (TS << 7) | ( (tp[index++] & 0xfe) >> 1);
    if (TS==0)              // In the zero case, we'll make it "1" instead. This solves
the problem of
            TS = 1;         // inserting a zero-pts value into the ring which is a
"non-pts" in our book.
    return TS;
}
void CDataBlock::MakeAncillary(QI_AncillaryType atype. unsigned int at_index,
DWORDLONG at_value)
{
        QI_ANCILLARY_DATA ad;
        ad.aType = atype;
        ad.aValue = at_value;
        SetErrBit(atype);
        // Now. index is tricky. The rules created for ancillary data dictate that the
index
        // listed is "offset" or "modified" depending on the output type and the
ancillary data type.
        // No ancillary data is written while scanning for synchronization points.
        if (bLookingForSync && SYNC_index==-1)
                return;
        switch(out_type)
        {
        case TS:
                ad.aIndex = (int)(p_curout-p_data_out) + at_index;  // Calculate an
index based on beginning of data_out.
                break;
```

```
        case PES:
//              assert(FALSE);
                break;
        case LengthRichPES:
                assert(FALSE);
                break;
        case ES:
                switch (atype)
                {
//enum QI_AncillaryType {InvalidMinAT, aPTS, aDTS, aPCRb, aPCRx, aESCR,
//              aPESHeader, aVidSEQ, aAudFrameStart, aDiscontinuity, aScrambled,
//              aRepeatPacket, aStuffingPacket, aReservedField, aNoPayload,
aBadSyncByte47,
                case aPTS:
                case aDTS:
                case aPCRb:
                case aPCRx:
                case aScrambled:
                case aDiscontinuity:
                case aVidSEQ:
                case aNoPayload:
                case aStuffingPacket:
                case aRepeatPacket:
                case aAudFrameStart:
                case aBadSyncByte47:
//              case aESCR:
//              case aPESHeader:
                        // Essentially remove "index" since in all of these cases, index
is an offset into
                        // the transport header or PES header (which follows the
transport header) and in
                        // ES mode, both the PES header and transport header will be
removed. So, the
                        // final index should point to the place in the output stream
where the next
```

```
            // valid ES payload will be laid down.
            ad.aIndex = (int)(p_curout-p_data_out);
            break;
        }
    break;
default:
        assert(FALSE);
        break;
    }
    // Now comes the tricky part.
    // The idea is to figure out whether or not we have enough space at our
"p_ancillary_cur" to
    // lay down one more ancillary data packet. If so. just do it.
    //
    // If not, then we have to move the "already done" portion of ancillary data to
the BEGINNING
    // of the circular buffer and then readjust the pointers. At that point. we're
ready to laydown
    // our ancillary data packet.
    if (p_ancillary_cur + sizeof(QI_ANCILLARY_DATA) >= p_circ_out-
>GetEndPtr())
        {
            memcpy(p_circ_out->GetStartPtr(), p_ancillary_start, num_ancillary *
sizeof(QI_ANCILLARY_DATA));
            p_ancillary_start = p_circ_out->GetStartPtr();
            p_ancillary_cur = p_ancillary_start + num_ancillary *
sizeof(QI_ANCILLARY_DATA);
        }
    // Now we have room for one more record no matter what.
    memcpy(p_ancillary_cur, &ad. sizeof(QI_ANCILLARY_DATA));
    // Adjust for the new record.
    num_ancillary++;
    p_ancillary_cur += sizeof(QI_ANCILLARY_DATA);
}
void CDataBlock::GetBlockInfo(PQI_STREAMOUT p_str)
```

```
        {
                p_str->pstream = p_data_out;
                p_str->stream_len = len_data_out;
                p_str->num_ancillary_elements = num_ancillary;
                p_str->p_ancillary = (PQI_ANCILLARY_DATA)p_ancillary_start;
        }
        void CDataBlock::setSyncToFrame()
        {
                bLookingForSync = TRUE;
        }
        void CDataBlock::DeleteTempTrans()
        {
                if (p_copy_curtrans)
                        delete [] p_copy_curtrans;
                if (p_copy_lasttrans)
                        delete [] p_copy_lasttrans;
                if (p_copy_nexttrans)
                        delete [] p_copy_nexttrans;
                p_copy_lasttrans = NULL;
                p_copy_curtrans = NULL;
                p_copy_nexttrans = NULL;
        }
        void CDataBlock::FormatTransPacket(unsigned char* tpak)
        {
#ifdef _DEBUG
                assert(tpak);
                sprintf(TransOut, "Header: SB:%02x Bits:%01x PID:%04x Bits:%01x
CC:%01x\n",
                        tpak[0], (tpak[1]&0xe0)>>5, ((tpak[1]&0x1f)<<8)|tpak[2],
                        (tpak[3]&0xf0)>>4, tpak[3]&0x0f);
                HexAsciiDump((char*)(TransOut+strlen(TransOut)), (char*)(tpak+4),
TRANSPORT_SIZE-4);
#endif
        }
```

```
void CDataBlock::DumpDataBlock(unsigned char * ptpaks. unsigned int
index_interest, unsigned int num_packets, QI_AncillaryType anc)
{
#if 0
#ifdef _DEBUG
        int I;
        if (!fp_dump)
                fp_dump = fopen("DataBlockDump.txt". "a+");
        if (fp_dump)
        {
                fprintf(fp_dump, "\n******************* DUMP START
******************\n\n");
                fprintf(fp_dump, "DatablockDump: Num_Packets=%d, Packet of
Interest=%d, lastAncillary=%d\n\n", num_packets, index_interest. (int)anc);
                for (i=0;i<(int)num_packets;i++)
                {
                        fprintf(fp_dump, "\nPACKET# %d\n",i);
                        FormatTransPacket(ptpaks+(i*TRANSPORT_SIZE));
                        fwrite(TransOut, sizeof(char), strlen(TransOut), fp_dump);
                }
                fprintf(fp_dump, "****************** DUMP COMPLETE
******************\n\n");
        }
#endif
#endif
}
void CDataBlock::setLastCC(unsigned char lcc)
{
        assert(lcc < 0x10);
        prev_cont = lcc;
}
//
// Debug function just for "pre-screening" a block of transport packets.
// This function *ONLY* checks for continuity.
//
```

```
void CDataBlock::PreCCCheck()
{
#ifdef _DEBUG
        int I, num_packets;
        unsigned char* p_packet;
        unsigned char curCC;
        assert(FALSE);         // Leave this when we DONT want the function to be
used.
        p_packet = p_data_in;
        assert(len_data_in % TRANSPORT_SIZE == 0);
        num_packets = len_data_in / TRANSPORT_SIZE;
        for (i=0; I<num_packets; i++, p_packet += TRANSPORT_SIZE)
        {
                assert(*p_packet == 0x47);
                curCC = p_packet[3] & 0x0f;
                if (((prev_cont+1)%0x10) != curCC)
                {
                        DumpDataBlock(p_data_in, I, num_packets, InvalidMinAT);
                }
        }
#endif
}
BOOL CDataBlock::getNeedsResync()
{
        return bLookingForSync;
}
void CDataBlock::SetErrBit(QI_AncillaryType atype)
{
        assert((int)atype > InvalidMinAT && (int)atype < InvalidMaxAT);
        assert((int)atype < sizeof(ErrBits)*8 - 1);     // ErrBits is a 32Bit signed value.
Cant set any more bits than this.
        ErrBits |= 1<<(int)atype;
}
BOOL CDataBlock::IsErrBitSet(QI_AncillaryType atype)
{
```

```
        assert((int)atype > InvalidMinAT && (int)atype < InvalidMaxAT);
        assert((int)atype < sizeof(ErrBits)*8 - 1);      // ErrBits is a 32Bit signed value.
Cant set any more bits than this.
        return (BOOL)(ErrBits & 1<<(int)atype);
    }
```

Table C is a source code listing of a C++-specific implementation of a definition of recycled buffer processing class in Table A.

## Table C.  Definition of Recycled Buffer Processing Class, Source Code Listing

```
// DataBlock.h: interface for the CDatablockclass.
//
////////////////////////////////////////////////////////////
#if !defined(AFX_datablock
_H__D9F6D8E3_4D63_11D2_A583_00A0C98A283A__INCLUDED_)
#define AFX_datablock
_H__D9F6D8E3_4D63_11D2_A583_00A0C98A283A__INCLUDED_
#if _MSC_VER >= 1000
#pragma once
#endif // _MSC_VER >= 1000
#include "QIMPEGTransport.h"
#include "CircularBuff.h"
class CDatablock
{
public:
        BOOL IsErrBitSet(QI_AncillaryType atype);
        int getDiscErrors() { return disc_errors; };
        BOOL getNeedsResync();
        void PreCCCheck();
        unsigned char getCC() { return prev_cont; };
        void setLastCC(unsigned char lcc);
        unsigned long getOutputLength() { return len_data_out; };
        unsigned long getInputLength() { return len_data_in; };
```

```
        unsigned long getNumAncillary() { return num_ancillary; };
        BOOL getLookingForSync() { return bLookingForSync; };
        void setSyncToFrame();
        void GetBlockInfo(PQI_STREAMOUT p_str);
        void ParsePESHeader();
        void ProcessBlock();
        int InputCopy(char* p_in, unsigned long len);
        CDataBlock(CCircularBuff* p_bin, CCircularBuff* p_bout,
QI_InputStreamType it, QI_OutputStreamType ot);
        virtual ~CDataBlock();
protected:
        void SetErrBit(QI_AncillaryType atype);
        int disc_errors;
        DWORD ErrBits;
        FILE* fp_dump;
        void DumpDataBlock(unsigned char* ptpaks, unsigned int index_interest,
unsigned int num_packets. QI_AncillaryType anc);
        char TransOut[1024];
        void FormatTransPacket(unsigned char* tpak);
        void DeleteTempTrans();
        unsigned char* p_copy_nexttrans;
        unsigned char* p_copy_curtrans;
        unsigned char* p_copy_lasttrans;
        QI_AncillaryType lastAncillary;
        BOOL bLookingForSync;
        void MakeAncillary(QI_AncillaryType atype, unsigned int at_index,
DWORDLONG at_value);
        DWORDLONG ParseTS_40(unsigned char checkbits);
        void ParseAdaptationField();
        unsigned char* ParseTransport(unsigned char* p_packet, unsigned int*
p_payload_len);
        void FixupAncillaryPointers();
        void SetupOutputBuffer();
        CCircularBuff* p_circ_in;
        CCircularBuff* p_circ_out;
```

```
                unsigned char* p_data_in;
                unsigned long len_data_in;
                unsigned char* p_data_out;
                unsigned long len_data_out;
                unsigned char* p_curout;
                QI_InputStreamType in_type;
                QI_OutputStreamType out_type;
                unsigned char* p_ancillary_start;
                unsigned char* p_ancillary_cur;
                unsigned long num_ancillary;
                QI_ANCILLARY_DATA ancillary_entry;
                unsigned int index;    // "global" Index into transport packet.
                unsigned char* tp;     // Transport packet being scanned.
                unsigned char prev_cont;
                // PES header entries
                unsigned int PES_length;
                unsigned char scrambling_control;
                unsigned char data_alignment_indicator;
                unsigned char PTS_DTS_flags;
                DWORDLONG PTS, DTS;
                int SYNC_index;
        };
        class CDataBlockList : public CPtrList
        {
        public:
                CDataBlock* Find(const char* pdata);
                CDataBlockList();
                virtual ~CDataBlockList();
                POSITION AddBlock(CDataBlock*pdb);
                int DeleteBlock(char* pdata);
                CDataBlock* RemoveHead();
        protected:
                POSITION FindPos(char* pdata);
        };
```

```
#endif // !defined(AFX_datablock
_H__D9F6D8E3_4D63_11D2_A583_00A0C98A283A__INCLUDED_)
```

Table D below is a source code listing of a C++-specific implementation of a definition of global objects used in the system disclosed herein.

**Table D.  Global Object Definition, Source Code Listing**

```
#ifndef _H_TRANSPORTINTERFACE
#define _H_TRANSPORTINTERFACE

#include <afxwin.h>
#include <assert.h>
#define TRANSPORT_SIZE 188
#define QI_OK 0 // -- Success.
#define QI_STREAM_UNREGISTERED 8 // - source/handle not found internally
#define QI_STREAM_ALREADY_REGISTERED 9 // - source/handle already in
internal lists.
#define QI_INVALID_INTYPE 16          // - input type not supported.
#define QI_INVALID_OUTTYPE 17              // - output type not supported.
#define QI_NO_MEMORY 32                      // - No memory for
adding stream to internal lists.
#define QI_NODATA_AVAILABLE 33          // - Currently there is no data
blocks available on the output.
#define QI_INPUTBUFFER_MOD188_ERROR 34// - Input data buffers must be
given in modulo-188 byte increments.
#define QI_NODECODER 128
#define QI_NOWINDOW  129
enum QI_InputStreamType {InvalidMinIT, VideoTS, AudioTS, InvalidMaxIT};
enum QI_OutputStreamType {InvalidMinOT, TS, PES, LengthRichPES, ES,
InvalidMaxOT};
enum QI_AncillaryType {InvalidMinAT, aPTS, aDTS, aPCRb, aPCRx, aESCR,
                aPESHeader, aVidSEQ, aAudFrameStart, aDiscontinuity, aScrambled,
                aRepeatPacket, aStuffingPacket, aReservedField, aNoPayload,
aBadSyncByte47,
```

```c
                InvalidMaxAT};
// Discontinuity "type"
#define QI_DISC_CONTCOUNTER  0
#define QI_DISC_TRANSERROR   1
#define QI_DISC_ADAPT_FIELD  2
#define QI_DISC_BAD_SYNCBYTE 3
typedef struct QIAncillary {
        QI_AncillaryType aType;
        int aIndex;
        DWORDLONG aValue;
} QI_ANCILLARY_DATA, *PQI_ANCILLARY_DATA;
typedef struct QIStreamOut {
        unsigned char* pstream;
        int stream_len;
        int num_ancillary_elements;
        PQI_ANCILLARY_DATA p_ancillary;
} QI_STREAMOUT, *PQI_STREAMOUT;
typedef struct QITransStats {
        int num_in_blocks, num_out_blocks;
        int in_size, out_size;
        int in_bytes_allocated;
        // This is *NOT* the circular buffer output allocation value. It is ONLY the
        // number of bytes which are payload output. No ancillary data and *NO
SLACK* bytes.
        int num_payload_outbytes;
        // int approx_out_bytes_allocated;    // No support for this due to variable
        int disc_errors;
} QI_TRANS_STATS, *PQI_TRANS_STATS;
// stdcall ??
#define EXPORTAPI __declspec(dllexport)
#ifdef __cplusplus
extern "C"
{
#endif
/* API Definitions follow. */
```

```
EXPORTAPI int QI_DllEnabled(void);
//
// Input and config items
//
EXPORTAPI int QI_RegisterStream(int source, unsigned int handle,
QI_InputStreamType in_type, QI_OutputStreamType out_type);
EXPORTAPI int QI_UnRegisterStream(int source, unsigned int handle);
EXPORTAPI int QI_ReSync(int source, unsigned int handle);
EXPORTAPI int QI_FreeResourcesForStream(int source, unsigned int handle);
EXPORTAPI int QI_TransportInputCopy(int source, unsigned int handle, char*
p_datain, unsigned long len);
//EXPORTAPI int QI_TransportInputReference(int source, unsigned int
stream_handle, const char* p_datain, unsigned long len);
//
// Output interfaces
//
EXPORTAPI int QI_GetOutputStream(int source, unsigned int handle,
PQI_STREAMOUT p_streamout);
EXPORTAPI int QI_GetStats(int source, unsigned int handle, PQI_TRANS_STATS
p_stats);
#ifdef __cplusplus
}
#endif
#endif
```

Table E below is a source code listing of a C++-specific implementation of a module that oversees data blocks and that keeps track of the data blocks.

**Table E.  Data Block Tracking, Source Code Listing**

```
// Transport.cpp: implementation of the CTransport class.
//
//////////////////////////////////////////////////////////////
#include "Transport.h"
#ifdef _DEBUG
```

```
#undef THIS_FILE
static char THIS_FILE[]=__FILE__;
#define new DEBUG_NEW
#endif
#define MEGABYTE 1024 * 1024
#define KBYTE 1024
//#define DUMP_DATA
#define VIDEO_CIRCULAR_BUFF_SIZE 2 * MEGABYTE
#define AUDIO_CIRCULAR_BUFF_SIZE VIDEO_CIRCULAR_BUFF_SIZE / 8
//////////////////////////////////////////////////////////////////////
// Construction/Destruction
//////////////////////////////////////////////////////////////////////
CTransport::CTransport(int src, unsigned int han, QI_InputStreamType in_type,
QI_OutputStreamType out)
{
        fp_dump = NULL;
        fp_dump_Getout = NULL;
        source = src;
        handle = han;
        stream_type = in_type;
        out_type = out;
        in_allocated = 0;
        num_payload_outbytes = 0;
        prev_lastCC = 0xff;
        disc_errors = 0;
        // Timer section
        bCopiedDataToOutList = FALSE;
        bWaitTimerPassed = FALSE;
        time_start = 0;
        // Assume we'll want to look for a sync initially. (at least in ES mode)
        if (out_type==ES || out_type==PES || out_type==LengthRichPES)
                setReSync();
        assert(out_type==ES || out_type==PES);      // Only supporting elementary
streams at this point.
```

```
            // Do *NOT* initialize the input buffer here. If REFERENCE copies on the
input are
            // used, then there is no need to allocate an input circular buffer.

            // Also, do not initialize the output buffer here since we can't report the
            // "out of memory" condition to the caller from a constructor.
}
CTransport::~CTransport()
{
        if (fp_dump)
                fclose(fp_dump);
}
void CTransport::FreeResources()
{
}
int CTransport::InputCopy(char * p_in, unsigned long len)
{
        CDatablock*pdb;
        unsigned long buflen;
        if (len % 188 != 0)
        {
//              assert(FALSE);
                return QI_INPUTBUFFER_MOD188_ERROR;
        }
//
// Uninitialized circular buffers?
//
        if (!in_buff.GetStartPtr())
        {
                switch(stream_type)
                {
                case VideoTS:
                        buflen = VIDEO_CIRCULAR_BUFF_SIZE;
                        break;
                case AudioTS:
```

```
                              buflen = AUDIO_CIRCULAR_BUFF_SIZE;
                              break;
                      default:
                              assert(FALSE);
                              buflen = 0;
                              break;
                      }
                      if (!in_buff.SetBufferSize(buflen))
                              return QI_NO_MEMORY;
                      if (!out_buff.SetBufferSize(buflen))
                              return QI_NO_MEMORY;
              }
              // Make a new datablockfor the incoming data.
              pdb = new CDataBlock(&in_buff, &out_buff, stream_type, out_type);
              if (!pdb)
                      return QI_NO_MEMORY;
              in_allocated += len;
              pdb->InputCopy(p_in, len);
              dl.Lock();
              data_list_in.AddBlock(pdb);
              dl.Unlock();
              return QI_OK;
      }
      CTransportList::CTransportList()
      {
      }
      CTransportList::~CTransportList()
      {
              while(!IsEmpty())
                      delete RemoveHead();
      }
      POSITION CTransportList::AddStream(CTransport* ptr)
      {
              return AddTail(ptr);
      }
```

```
CTransport* CTransportList::RemoveHead()
{
        assert(!IsEmpty());
        if (IsEmpty())
                return NULL;
        else
                return (CTransport*)CPtrList::RemoveHead();
}
int CTransportList::DeleteStream(int source, unsigned int handle)
{
CTransport* pt;
POSITION pos;
        pos = FindPos(source, handle);
        if (!pos)
                return QI_STREAM_UNREGISTERED;
        else
        {
                pt = (CTransport*)GetAt(pos);
                RemoveAt(pos);
                delete pt;
                return QI_OK;
        }
}
CTransport* CTransportList::Find(int source, unsigned int handle)
{
CTransport* pt;
POSITION pos;
        pos = FindPos(source, handle);
        if (!pos)
                return NULL;
        else
        {
                pt = (CTransport*)GetAt(pos);
                assert(pt);
                return pt;
```

```
                }
        }
POSITION CTransportList::FindPos(int source, unsigned int handle)
{
CTransport* pt;
POSITION pos, prevpos;
        pt = NULL;
        pos = GetHeadPosition();
        while(pos)
                {
                        prevpos = pos;
                        // Get entry pointer and advance pos to next entry.
                        pt = (CTransport*)GetNext(pos);
                        assert(pt);
                        if (pt->getSource()==source && pt->getHandle()==handle)
                                return prevpos;
                }
        return NULL;
}
void CTransport::ProcessInputBlock()
{
        CDataBlock* pdb;
        dl.Lock();
        if (!data_list_in.IsEmpty())
        {
                pdb = data_list_in.RemoveHead();
                dl.Unlock();
                assert(pdb);
                if (bLookingForSync)
                        pdb->setSyncToFrame();
                // continue CC checking from previous blocks.
                if (prev_lastCC != 0xff)
                        pdb->setLastCC(prev_lastCC);
//              pdb->PreCCCheck();
```

```
                    // Translate the input stream into the output "type" desired with
ancillary data too.
                        pdb->ProcessBlock();
                    .   disc_errors += pdb->getDiscErrors();
                        // If we process the block and there are errors, we can "reset" the
resync need at this
                        // level for the next block.
                        if (pdb->getNeedsResync())
                            setReSync();
                        // Prep for next block continuation.
                        prev_lastCC = pdb->getCC();
                        if (bLookingForSync && !pdb->getLookingForSync())      // STILL
looking for sync?
                            bLookingForSync = FALSE;
                        in_allocated -= pdb->getInputLength();
                        assert(in_allocated >= 0);
                        if (pdb->getOutputLength())
                        {
                            // Add the
//                          approx_out_allocated += pdb->getNumAncillary() *
sizeof(QI_ANCILLARY_DATA);
//                          approx_out_allocated += pdb->getOutputLength();
                            num_payload_outbytes += pdb->getOutputLength();
                            // After processing, the block is moved from "limbo" to the
output list.
                            // At this point, the consumer will see that there is newly
processed data to grab.
                            dl.Lock();
                            data_list_out.AddBlock(pdb);
                            dl.Unlock();
                            if (!bCopiedDataToOutList)
                            {
                                bCopiedDataToOutList = TRUE;
                                time_start = GetTickCount();
                            ;
```

```
                    }
                    else
                    {
                            // We must have been searching for sync and so we may as well
        delete it now
                            // rather than putting it in the output queue (empty).
                            delete pdb;
                    }
            }
            else
                    dl.Unlock();
    }
    int CTransport::GetOutputBlock(PQI_STREAMOUT p_str)
    {
            CDataBlock* pdb:
            assert(p_str);
            dl.Lock();
            if (data_list_out.IsEmpty())
            {
                    dl.Unlock();
                    return QI_NODATA_AVAILABLE:
            }
    #ifdef TIMER_ENABLED
            // Check for 'timer' fill.
            if (!bWaitTimerPassed)
            {
                    if (!bCopiedDataToOutList || GetTickCount()-
        time_start<TIMER_WAIT)
                    {
                            dl.Unlock();
                            return QI_NODATA_AVAILABLE;
                    }
                    else
                    {
                            // Data has been copied to the output list and timer has passed.
```

```
                    // Go ahead and let the output data flow.
                    bWaitTimerPassed=TRUE;
                }
            }
#endif
        pdb = data_list_out.RemoveHead();
        assert(pdb);
        dl.Unlock();
        num_payload_outbytes -= pdb->getOutputLength();
        pdb->GetBlockInfo(p_str):
#ifdef DUMP_DATA
        if (!fp_dump_Getout)
        {
            if (stream_type==VideoTS)
                fp_dump_Getout = fopen("TH_Video_Getout.mpg", "wb");
            else
                fp_dump_Getout = fopen("TH_Audio_Getout.mpg", "wb");
            assert(fp_dump_Getout);
        }
        if (fp_dump_Getout)
        {
            assert(p_str->stream_len);
            assert(p_str->pstream);
            fwrite(p_str->pstream, sizeof(char), p_str->stream_len,
fp_dump_Getout);
            fflush(fp_dump_Getout);
        }
#endif
        // It is now out of the output queue and can be deleted. The memory pointers
are still
        // valid until the circular queue gets nuked on wraparound.
        delete pdb;
        return QI_OK;
}
int CTransport::GetNumOutputBlocks()
```

```
{
    int nb;
    dl.Lock();
    nb = data_list_out.GetCount();
    dl.Unlock();
    return nb;
}
int CTransport::GetNumInputBlocks()
{
    int nb;
    dl.Lock();
    nb = data_list_in.GetCount();
    dl.Unlock();
    return nb;
}
int CTransport::GetStats(PQI_TRANS_STATS p_stats)
{
    p_stats->num_in_blocks = GetNumInputBlocks();
    p_stats->num_out_blocks = GetNumOutputBlocks();
    p_stats->in_size = in_buff.GetBufferSize();
    p_stats->out_size = out_buff.GetBufferSize();
    p_stats->in_bytes_allocated = in_allocated;
    p_stats->num_payload_outbytes = num_payload_outbytes;
//  p_stats->approx_out_bytes_allocated = approx_out_allocated;
    p_stats->disc_errors = disc_errors;
    return QI_OK;
}
```

Table F below is a source code listing of a C++-specific implementation of a definition for a Data block tracking.

## Table F.  Definition of Datablock Tracking, Source Code Listing

```
// Transport.h: interface for the CTransport class.
//
```

```
///////////////////////////////////////////////////////
#if
!defined(AFX_TRANSPORT_H__F9F29140_427B_11D2_A583_00A0C98A283A_
_INCLUDED_)
#define
AFX_TRANSPORT_H__F9F29140_427B_11D2_A583_00A0C98A283A__INCLU
DED_
#if _MSC_VER >= 1000
#pragma once
#endif // _MSC_VER >= 1000
#include <afxmt.h>
#include "QIMPEGTransport.h"
#include "CircularBuff.h"
#include "DataBlock.h"
#define TIMER_WAIT        2000    // Wait 2000 ms before allowing data to go "out"
class CTransport
{
public:
        int getDiscErrors() { return disc_errors; };
        void setReSync() { bLookingForSync=TRUE; };
        int GetStats(PQI_TRANS_STATS p_stats);
        int GetNumInputBlocks();
        int GetNumOutputBlocks();
        int GetOutputBlock(PQI_STREAMOUT p_str);
        void ProcessInputBlock();
        int InputCopy(char* p_in, unsigned long len);
        void FreeResources();
        CTransport(int src, unsigned int han, QI_InputStreamType in_type,
QI_OutputStreamType out);
        virtual ~CTransport();
        int getSource() { return source; };
        unsigned int getHandle() { return handle; };
protected:
        FILE* fp_dump;
        FILE* fp_dump_Getout;
```

```
        int disc_errors;
        unsigned char prev_lastCC;
        CCriticalSection dl;
        int in_allocated;
        BOOL bLookingForSync;
        int source;
        unsigned int handle;
        QI_InputStreamType stream_type;
        QI_OutputStreamType out_type;
        CCircularBuff in_buff, out_buff;
        CDataBlockList data_list_in, data_list_out;
        // Timer variables
        BOOL bCopicdDataToOutList, bWaitTimerPassed;
        DWORD time_start;
        unsigned long num_payload_outbytes;
};
class CTransportList : public CPtrList
{
public:
        CTransport* Find(int source, unsigned int handle);
        CTransportList();
        virtual ~CTransportList();
        POSITION AddStream(CTransport*pt);
        int DeleteStream(int source, unsigned int handle);
        CTransport* CTransportList::RemoveHead();
protected:
        POSITION FindPos(int source, unsigned int handle);
};
#endif //
!defined(AFX_TRANSPORT_H__F9F29140_427B_11D2_A583_00A0C98A283A_
_INCLUDED_)
```

Table G below is a source code listing of a C++-specific implementation of a definition of recycled buffer processing.

## Table G. Definition of Recycled Buffer Processing, Source Code Listing

```
// DataBlock.h: interface for the CDatablockclass.
//
//////////////////////////////////////////////////////////////
#if !defined(AFX_datablock
_H__D9F6D8E3_4D63_11D2_A583_00A0C98A283A__INCLUDED_)
#define AFX_datablock
_H__D9F6D8E3_4D63_11D2_A583_00A0C98A283A__INCLUDED_
#if _MSC_VER >= 1000
#pragma once
#endif // _MSC_VER >= 1000
#include "QIMPEGTransport.h"
#include "CircularBuff.h"
class CDatablock
{
public:
        BOOL IsErrBitSet(QI_AncillaryType atype);
        int getDiscErrors() { return disc_errors; };
        BOOL getNeedsResync();
        void PreCCCheck();
        unsigned char getCC() { return prev_cont; };
        void setLastCC(unsigned char lcc);
        unsigned long getOutputLength() { return len_data_out; };
        unsigned long getInputLength() { return len_data_in; };
        unsigned long getNumAncillary() { return num_ancillary; };
        BOOL getLookingForSync() { return bLookingForSync; };
        void setSyncToFrame();
        void GetBlockInfo(PQI_STREAMOUT p_str);
        void ParsePESHeader();
        void ProcessBlock();
        int InputCopy(char* p_in, unsigned long len);
        CDataBlock(CCircularBuff* p_bin, CCircularBuff* p_bout,
QI_InputStreamType it, QI_OutputStreamType ot);
        virtual ~CDataBlock();
```

```
protected:
        void SetErrBit(QI_AncillaryType atype);
        int disc_errors;
        DWORD ErrBits;
        FILE* fp_dump;
        void DumpDataBlock(unsigned char* ptpaks, unsigned int index_interest,
unsigned int num_packets. QI_AncillaryType anc);
        char TransOut[1024];
        void FormatTransPacket(unsigned char* tpak);
        void DeleteTempTrans();
        unsigned char* p_copy_nexttrans;
        unsigned char* p_copy_curtrans;
        unsigned char* p_copy_lasttrans;
        QI_AncillaryType lastAncillary;
        BOOL bLookingForSync;
        void MakeAncillary(QI_AncillaryType atype. unsigned int at_index,
DWORDLONG at_value);
        DWORDLONG ParseTS_40(unsigned char checkbits);
        void ParseAdaptationField();
        unsigned char* ParseTransport(unsigned char* p_packet. unsigned int*
p_payload_len);
        void FixupAncillaryPointers();
        void SetupOutputBuffer();
        CCircularBuff* p_circ_in;
        CCircularBuff* p_circ_out;
        unsigned char* p_data_in;
        unsigned long len_data_in;
        unsigned char* p_data_out;
        unsigned long len_data_out;
        unsigned char* p_curout;
        QI_InputStreamType in_type;
        QI_OutputStreamType out_type;
        unsigned char* p_ancillary_start;
        unsigned char* p_ancillary_cur;
        unsigned long num_ancillary;
```

```
QI_ANCILLARY_DATA ancillary_entry;
unsigned int index:      // "global" Index into transport packet.
unsigned char* tp;       // Transport packet being scanned.
unsigned char prev_cont;
// PES header entries
unsigned int PES_length;
unsigned char scrambling_control;
unsigned char data_alignment_indicator;
unsigned char PTS_DTS_flags;
DWORDLONG PTS, DTS;
int SYNC_index;
};
class CDataBlockList : public CPtrList
{
public:
        CDataBlock* Find(const char* pdata);
        CDataBlockList():
        virtual ~CDataBlockList();
        POSITION AddBlock(CDataBlock*pdb):
        int DeleteBlock(char* pdata);
        CDataBlock* RemoveHead();
protected:
        POSITION FindPos(char* pdata);
};
#endif // !defined(AFX_datablock
_H__D9F6D8E3_4D63_11D2_A583_00A0C98A283A__INCLUDED_)
```

The invention provides an algorithm that is a more efficient technique for solving a well-defined and relatively long-existing problem, *i.e.* that of locating start codes in an MPEG-2 stream. Any extant algorithm that validly accomplishes this can be viewed as prior art. One purpose of the invention is to reduce the amount of CPU time necessary to accomplish this defined goal. It should be appreciated by those skilled in the art that the invention, while useful for MPEG-2 data streams, is not limited to this standard and may readily be applied to other standards. For example, while the search pattern implemented for the preferred embodiment of the invention is hard-wired to MPEG-2, the general algorithmic concept can be applied to any problem where finding unique 3-byte patterns in a buffer is required. The concept is generally extensible to searches of any pattern length, but is particularly useful when the pattern is an odd number of bytes.

The presently preferred embodiment of the invention is particularly useful when deployed on CPUs having the following capabilities in their instruction sets (although it is not limited to just these types of processors):

- The ability to scan an arbitrarily-sized block of memory for a match or mismatch to a given byte/word/double-word value (e.g. the 80x86's SCAS instruction). In the preferred embodiment of the invention, only word scans are needed.

- The ability to compare two arbitrarily but equally sized blocks of memory for identicality, indicating whether they are or are not byte-for-byte identical (*e.g.* the 80x86's CMPS instruction).

- The ability to perform both of the above functions as a single macro-instruction (*e.g.* the 80x86's REPE/REPNE instructions).

The source code for an algorithm which implements a presently preferred embodiment of the invention is set forth in Table A below in a format compatible with the Microsoft C++ compiler manufactured by Microsoft Corporation of Redmond, WA. A narrative flow chart of the algorithm follows:

0 Entry point. Is "buffer end trimming" enabled (via calling parameter)? If not, go to step 2.

1 See if the end bytes of the buffer match any of the following six patterns:

```
00
00 00
00 00 01
```

If so, reduce the size of the evaluation buffer to remove these bytes. This reduction to the size of the logical buffer must be communicated back to the calling routine, so that these "skipped" bytes are re-evaluated on the subsequent call to the start-code scanner routine. Loop step 1 until test condition is FALSE. It should be noted that in some cases (such as a buffer consisting entirely of zero bytes) that this trimming could wind up consuming the entire buffer; in this special case. the original size of the buffer should be reduced by one or two bytes, depending on whether the last one or two bytes of the buffer are zeros, and return to the caller saying no start codes exist in the buffer. (The actual code used in the source code included below uses a much more efficient, but more difficult to describe, algorithm that has the same net impact. Those skilled in the art will appreciate and understand the operation of either algorithm as set forth herein.) If the size of the buffer, factoring in any initial offset, is less than six bytes, return to the caller saying that no start codes are present in the now size-reduced buffer. Otherwise, if the new size of the buffer is an odd number, decrement it to make it an even number, and reflect this back to the caller, so that this additional "trimmed-off" byte gets re-scanned on the next call.

2 See if first DWORD at the current buffer evaluation position is zero. If not, skip to step 5.

3 Scan forward until the first non-zero WORD is found. This is a WORD scan, as defined in step 5. If the end of the evaluation buffer is reached before a non-zero WORD is found, return to caller (if "buffer end trimming" is enabled, this should not occur).

4 Move evaluation buffer pointer back one WORD. since this "leading" zero WORD may be the beginning of a start-code.

5 Scan forward for the first zero WORD (this is detected immediately, if step 4 was just executed). The scan is a WORD scan (the "search pointer" is advanced one WORD, i.e. two BYTEs, for each iteration). If the end of buffer is reached, flag that no ending zero WORD was found, and go to step 7.

6 Check at this point for the existence of a valid start code. This is based on the following rules:

The first two BYTES are zero.

The third BYTE is one.

If this is an audio channel (as defined by one of the calling parameters to the start-code scanning routine), see if the fourth BYTE lies in the range of 0xC0 through 0xDF, inclusive. If not, this is not a valid start code.

If this is <u>not</u> an audio channel, check that the fourth BYTE is <u>not</u> in the range of 0xC0 through 0xDF, inclusive. If it is, this is not a valid start code.

If the fourth BYTE is zero, check to see if the fifth and sixth bytes are zero. If they both are, this is <u>not</u> a valid start-code.

If this discovered zero WORD is found to <u>not</u> be a valid start-code, loop back to step 5. Else, store offset of this discovered start-code in a local variable.

7 Define a temporary section of the evaluation buffer, from the point where the scan started at step 5 (but not advanced by any failed start-code tests in step 6) to the point where the start-code was detected in step 6 (or the end of buffer, if we got here from step 5). Call this sub-buffer the *zero-word reach*. Set the "current position" to the beginning of this zero-word reach.

8 Scan forward, as a WORD scan (see step 5 for definition), bounded inside the zero-word reach, for the next WORD of value 00 01 (this would be expressed as 0x0001 on big-endian machines, or 0x0100 on little-endian machines). If not found, go to step 10.

9 Check to see if this is a valid start-code, using the rules defined in step 6 (but keeping in mind that the pointer is now one BYTE into the potential start-code). If a start-code is found, append its offset into the list to be returned to the caller. In either case, then loop back to step 8.

10 If the process got to step 7 from step 6 (rather than step 5), append the offset of the start code discovered in step 6 into the list to be returned back to the caller, set the "current pointer" to the WORD following the start-code discovered in step 6, and loop back to step 2. Otherwise, return to caller.

## EXAMPLE

Assume the offset buffer (the buffer to which the start-code offsets are written) can hold six entries. This example source buffer has 14 start codes (offsets expressed in hex). Byte patterns of 0x00 0x00 and 0x00 0x01 that are not actual start codes may be present; to save on detail, assume that such "false start codes" are detected and skipped over, and that it is possible to verify that each start code actually is a start code.

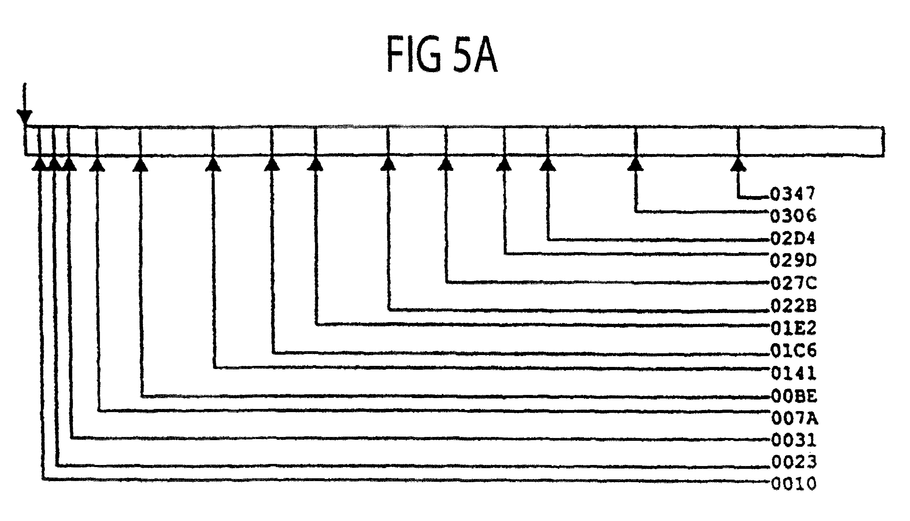

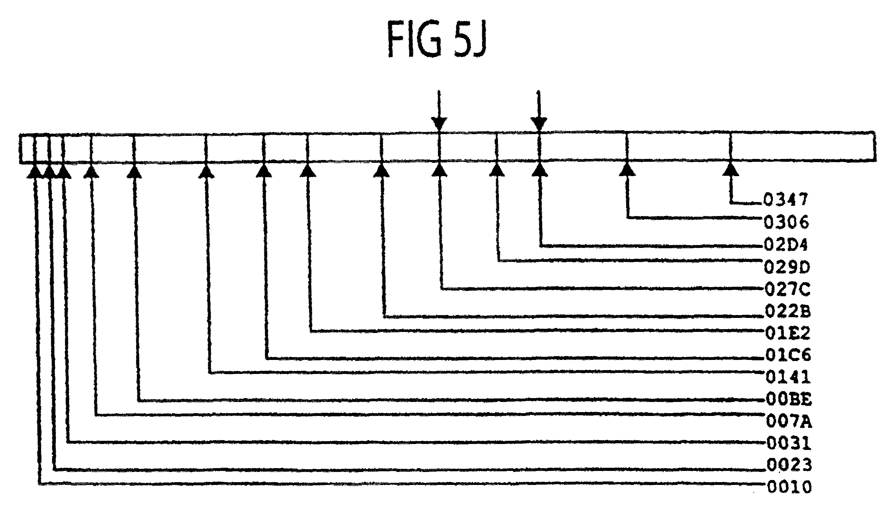

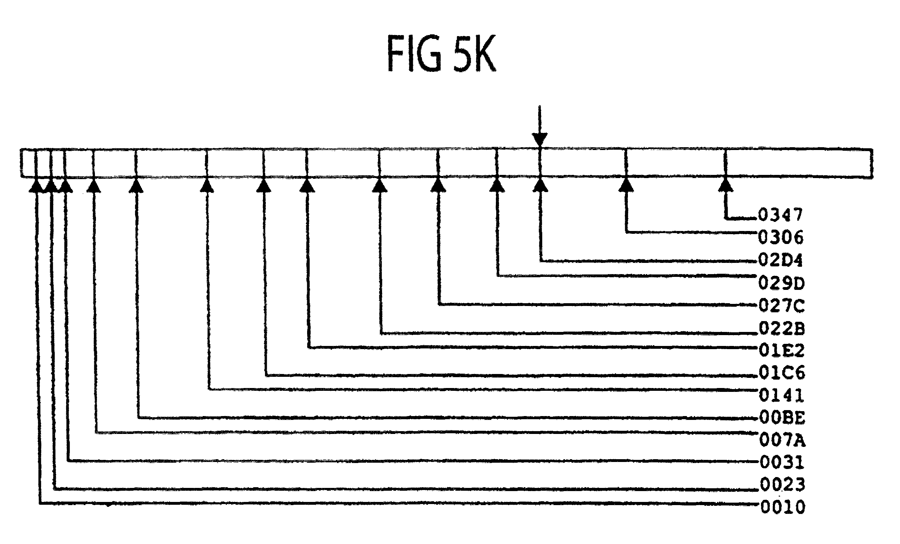

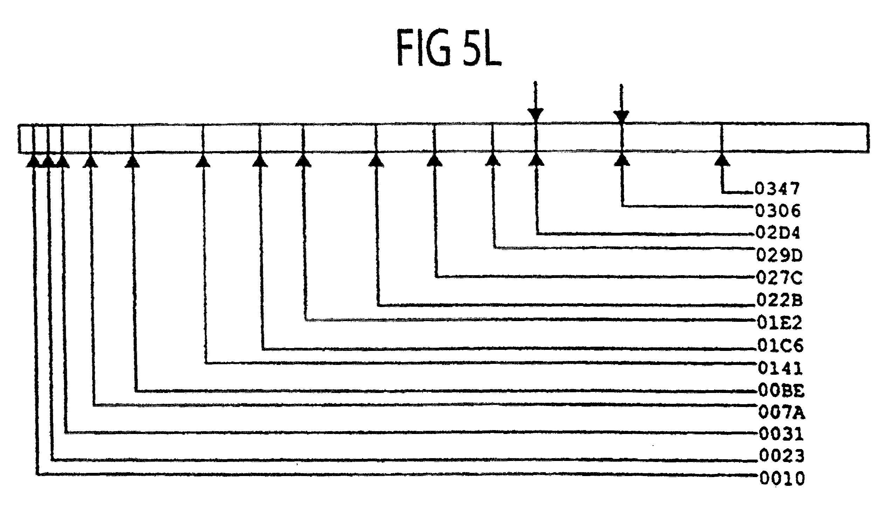

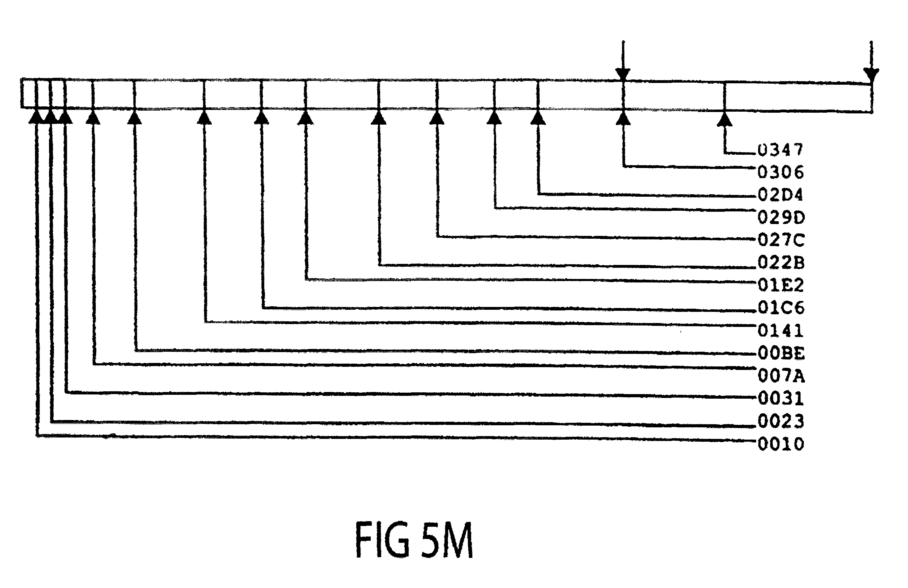

On entry, the buffer pointer is positioned at zero (see Fig. 5a).

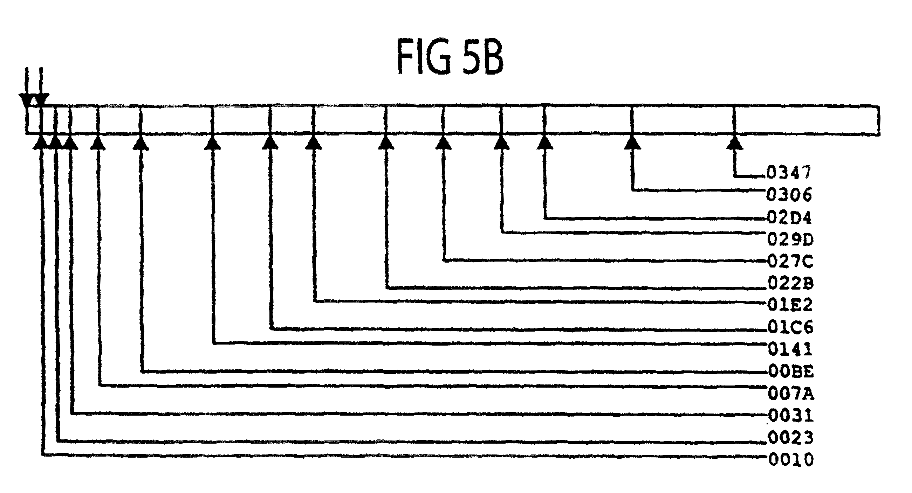

Look for the first aligned 0x00 0x00 word, which is found at 0x0010 (see Fig. 5b).

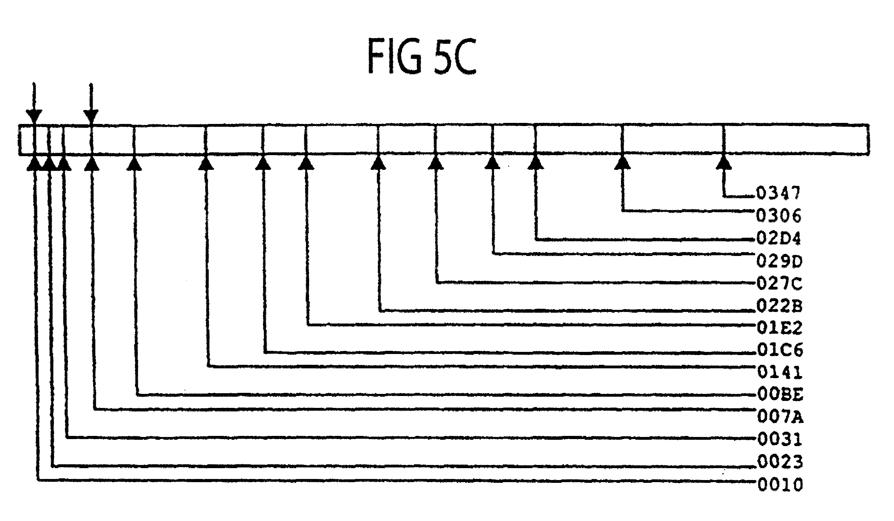

Establish the zero-word reach at 0x0000 to 0x0010 (see Fig. 5c). Look for word-aligned byte pattern of 0x00 0x01 in this reach. There are not any, so the offset 0x0010 is set in the output list, giving it one entry so far. Starting at one word after the previous zero-word reach (i.e. offset 0x0012), look for the next word-aligned byte pattern of 0x00 0x00. This is found at offset 0x007A (note that the difference between 0x0010 and 0x0012 is not shown in Fig. 5c, although in reality the left pointer is moved right by two address locations).

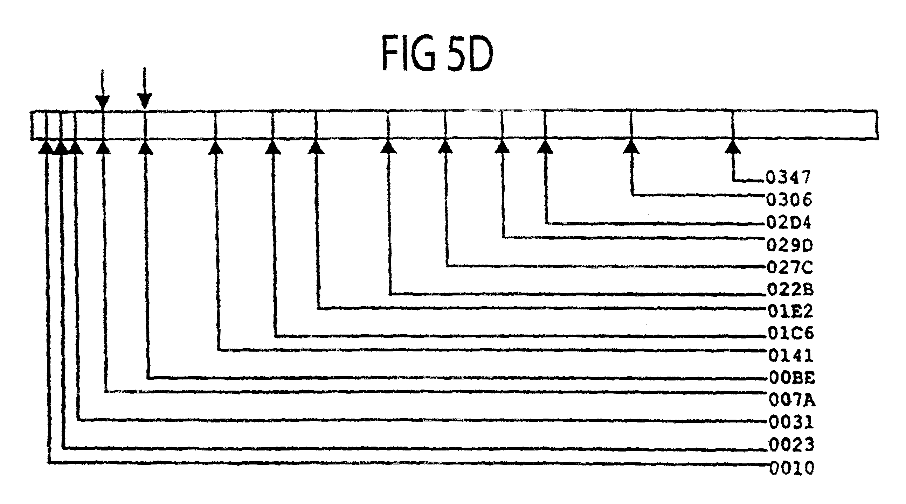

Scan this new zero-word reach for word-aligned byte patterns 0x00 0x01 (see Fig. 5d). Two are found - at 0x0024 and 0x0032. After verifying that 0x0023 and 0x0031 are start codes, add these two offsets into the table (bringing the total to three so far), and then add in the offset 0x007A, resulting in four entries in the output table. Next, look for the next word-aligned 0x00 0x00, finding it at 0x00BE.

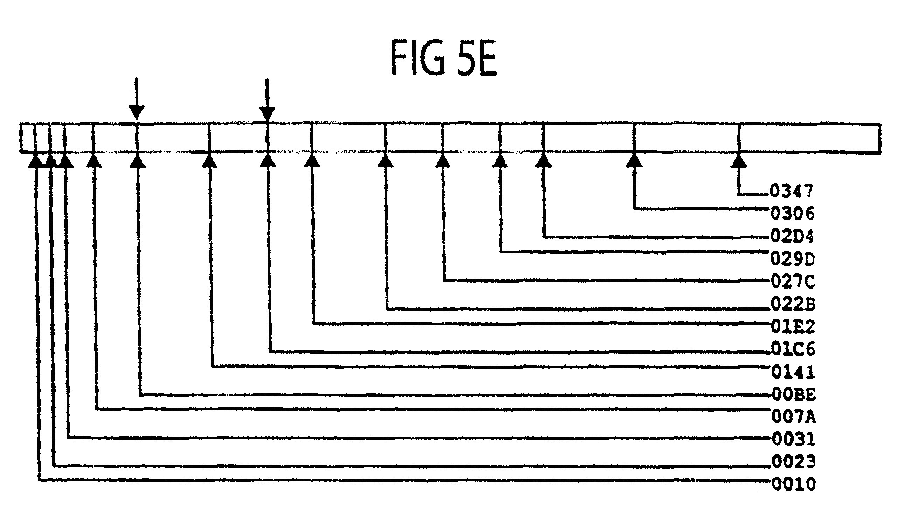

A scan of this zero-word reach reveals no "odd-aligned" start codes, so offset 0x00BE is added to the output table, bringing the number of entries up to five (out of six). The next zero-word reach takes us to offset 0x01C6 (see Fig. 5e).

A scan of the "odd-aligned" start codes finds one at 0x0141 (the 0x00 0x01 pattern found at 0x0142), so add that to the output table, filling it up to six. Because that was the size of the output table, return to the caller indicating that the output table has six entries.

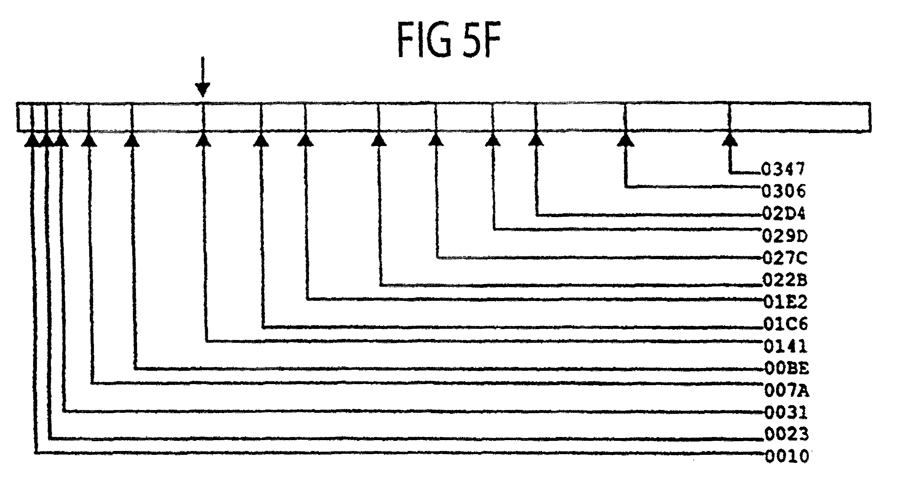

On the next call to the start-code scanner routine, start off with an initial offset of 0x0142 to "skip over" the last-detected start code(see Fig. 5f). The initial offset, if given, must always be an even number; if an odd number is passed in, it is incremented to make it even.

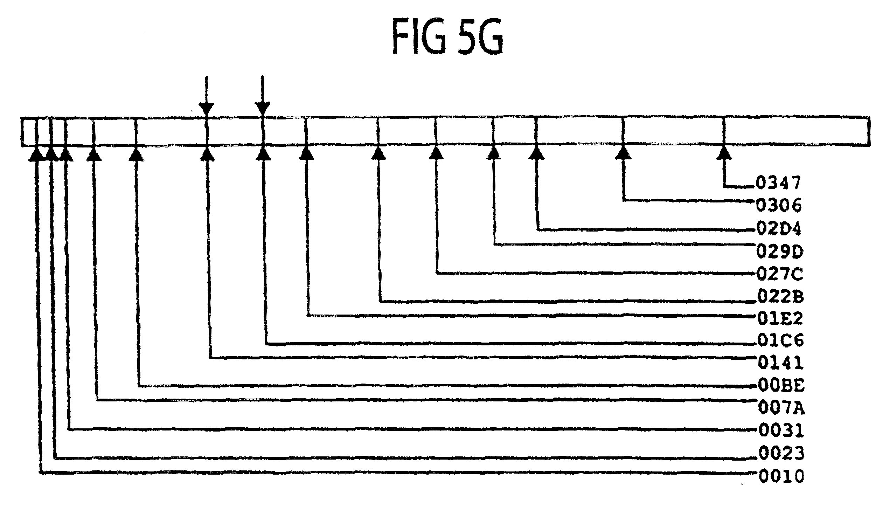

Look for the next word-aligned pattern of 0x00 0x00, again finding it at 0x01C6 (see Fig. 5g).

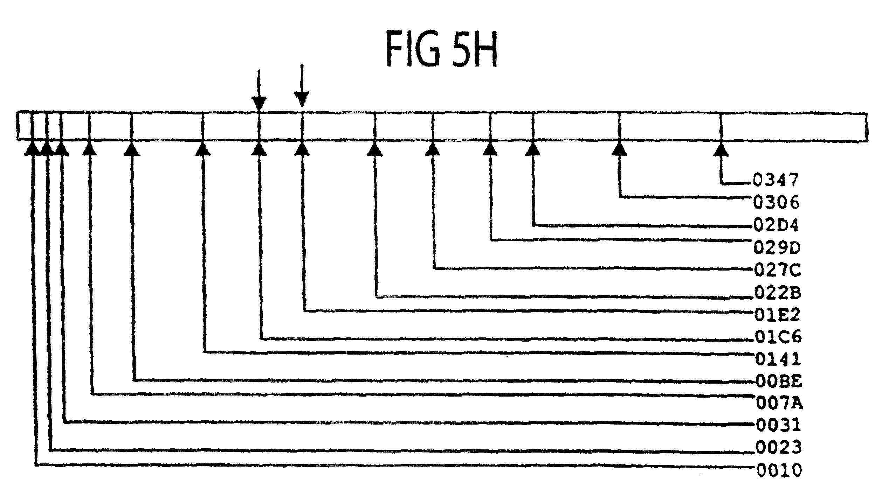

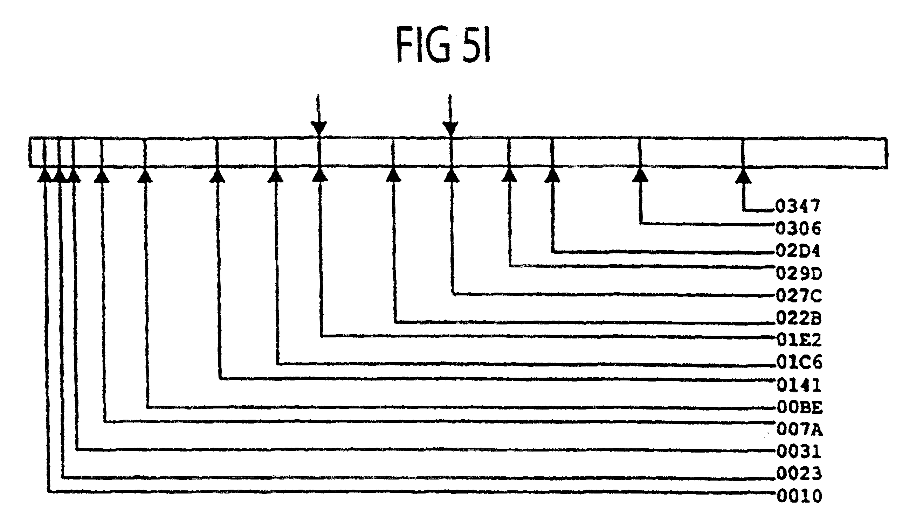

A re-scan of this zero-word reach finds no "odd-aligned" start codes, so the first entry into the output table is 0x01C6 (see Fig. 5h). Looking for the next zero-word reach finds it bounded at 0x01E2.

Again, there is no intervening "odd-aligned" start codes, so the second entry into the output table is 0x01E2 (see Fig. 5i). The next zero-word reach goes to offset 0x027C.

There is one "odd-aligned" start code in this reach, so the third entry in the output table becomes 0x0x022B, and the fourth 0x027C (see Fig. 5j). Another zero-word reach moves the search pointer to 0x02D4.

This zero-word reach has embedded in it a start code at 0x029D (the 0x00 0x01 pattern being detected at 0x029E), so the fifth and sixth entries into the output table are 0x029D and 0x02D4. Because that fills up the table, the process returns to the caller.

On the third call to the scanner for this buffer, the search is started at offset 0x02D6 (see Fig. 5k).

The next word-aligned 0x00 0x00 pattern is discovered at 0x0306 (see Fig. 5l).

A re-scan of this zero-word reach reveals no "odd-aligned" start codes, so the first entry into the output table is 0x0306. The next scan for the 0x00 0x00 pattern is unsuccessful, this fact is flagged and the process moves the "far end" of the now so-called zero-word reach to the end of the buffer (see Fig. 5m).

A re-scan of this sub-buffer for word-aligned 0x00 0x01 patterns finds one at 0x0348, so offset 0x0347 is added to the output table, bringing up its membership to two entries. Because this is the end of the buffer, there is nothing more to do, so the process returns to the caller, indicating that two more start-codes were found.

### Table H.  Source Code Listing of an Algorithm for Start Code Scanning In Accordance with the Invention

```
DWORD FindStartCodes(unsigned char *buf, DWORD bufOffset,
    DWORD &leng, DWORD *offsetList, DWORD listSize,
    unsigned char isAudio, DWORD noEndBufferTrimming)
{

WORD        savFLAGS;
DWORD       savESI, savEDI; // C++ compiler wants these
                // back
DWORD       bufp = (DWORD) (buf + bufOffset), bufLenAdj;
DWORD       hCnt = listSize;
```

```
if(!buf || !bufLen || (*bufLen - bufOffset) < 8 ||
   !offsetList || !listSize || bufOffset >= *bufLen - 6)
{
   assert(0); //sanity checks
   return 0;
}


__asm
{

   // Save things the C++ compiler wants preserved.

   pushf
   pop    word ptr savFLAGS
   mov    savESI,esi
   mov    savEDI,edi


   // See if we're to do buffer end-trimming

   mov    esi,bufLen
   cmp    dword ptr noEndBufferTrimming,0
   jne    skipLimitCheck

   // The way this works is thus: See if the last one
   // or to bytes of the buffer are zero: if so,
   // adjust the effective buffer length to exclude
   // them (they'll get re-scanned on the next scanner
   // call). Then, starting at the END of the buffer,
   // search backwards for the first non-zero byte.
   // If the resultant offset into the buffer where
   // the non-zero bytes was found is less than 2,
   // return to the caller saying there was no start
   // codes in the buffer. Else, if further
   // examination shows that this was a one byte
   // preceded to two zero bytes, reposition the
```

```
// point to before this start code and scan again.
// Otherwise, adjust the length of the buffer to
// just include this discovered non-zero byte.


    mov    ebx,buf       // buffer origin
    mov    ecx,[esi]     // get passed-in length
    mov    eax,[ebx+ecx-4] // get last 4 bytes of buffer
    shr    eax,8         // we only care about last 3
    cmp    eax,10000h    // is it a start code prefix?
    jne    zskip0        // no. so go do other tests
    sub    dword ptr [esi],3 // trim it off buffer
    jmp    zskip
zskip0:
    shr    eax,8
    cmp    ah,1          // test very last byte of
                         // buffer
    ja     skipLimitCheck // if greater than one, the
                         // buffer includes it
    jnb    zskip         // if it's 1, branch
    dec    dword ptr [esi] // else, "swallow" the 0 byte
    cmp    al,1          // same thing for 2nd-to-last
                         // buffer byte
    ja     skipLimitCheck
    jnb    zskip
    dec    dword ptr [esi]
zskip:
    mov    ecx,[esi]      // get adjusted buffer len
    sub    ecx,bufOffset  // limit to "scan buffer"
    mov    ebx,bufp
    std                   // reverse searches for this
                          // passage
loop0:
    lea    edi,[cbx+ecx-1] // get end addr of scan buf
    xor    al,al          // search for a zero byte
    repe   scasb
```

```
cmp    ecx,2        // too close to buf origin?
jb     outtaHere    // if so, exit
dec    ecx          // adj length to swallow 1st
                    // start prefix byte
mov    eax,[edi-1]  // get potential start code
                    // into EAX
and    eax,0FFFFFFh // see if it's really 00 00 01
cmp    eax,0010000h
je     loop0        // it is a start code, so keep
                    // on scanning
add    ecx,2        // else, adj buf length
add    ecx,bufOffset
mov    [esi],ecx    // and update caller's
                    // variable
skipLimitCheck:
cld
and    byte ptr [esi],0FEh // leng must be even
                           // number
mov    eax,[esi]     // get length of physical
                    // buffer after trimming
sub    eax,bufOffset // get length of evaluation
                    // buffer
shr    eax,1        // we scan words not bytes
mov    bufLenAdj,eax // init for scanning loops
mov    esi,offsetList // point to output list of
                    // offset
jmp    loop1a       // jump into the game


// Now, the way this works is thus: we scan the
// buffer (or part of buffer, if this isn't the
// first iteration of the loop) for the first
// word-aligned WORD of 0x0000. We then save its
// offset (or, if we didn't find such a WORD, the
// offset of the end of the buffer) in a local
// variable, and re-scan the same subbuffer we
```

```
            // just identified for the word-aligned pattern of
            // WORD value 0x0100. For each that we find, we
            // add an entry to the output list. Once we've
            // found all the 0x0100 WORDs in the subbuffer, we
            // then add the offset of the 0x0000 WORD found in
            // the first scan (if we found one) to the output
            // list. Then, starting with the subbuffer
            // following the 0x0000 WORD we just added to the
            // output list, we do it all over again. We keep
            // doing this until the scan for both the 0x0000
            // and 0x0100 pattern ends at the end of buffer.
            // This results in an ordered list of offsets in
            // the output buffer, without a lot of code
            // execution time to get it.


loop1:
    inc    ebx       // do we have an offset to a
                     // 0x0000 WORD?
    jz     loop1a    // nope, so skip the list add
    lea    eax,[ebx-1] // get addr of 0x0000 WORD
    sub    eax,buf   // subtract buffer org to get
                     // offset
    add    eax,eax   // shift it left one bit
    xchg   esi,edi
    mov    dl,[ebx+2] // get the start code
    xor    dl,0C0h   // see if it's within 0xC0 through
                     // 0xEF
    cmp    dl,030h   // set carry if so
    rcr    eax,1     // put in high-bit of offset
    stosd            // put in output list
    xchg   esi,edi

    dec    dword ptr hCnt // see if we've filled output
                     // list
    jz     exitRoutine    // if so, we're done
```

// Initial entry point here.

```
loop1a:
    mov     ecx,bufLenAdj   // restore ECX and EDI from
                            //previous iteration
    mov     edi,bufp
    xor     eax,eax     // we're looking for 0x0000
                        // patterns
    lea     ebx,[eax-1] // init EBX to no discovered
                        // 0x0000 WORD
loop1b:
    or      ecx,ecx     // at end of buffer?
    jz      exitRoutine


    // Bob W. pointed out that some MPEG versions used
    // zeros for stuffing bytes. Since we don't want
    // to examine these, we look first to see if the
    // next FOUR bytes are all zeros. If so, we assume
    // they're stuffing bytes, and swallow all the
    // following 0x0000 WORDs. Once we found the next
    // non-zero WORD, we back up two bytes (since they
    // could be the first two bytes of a start
    // prefix), and continue down our merry way.


    cmp     eax,[edi]   // zero DWORD?
    jne     loop1c      // nope, so skip this
    repe    scasw       // swallow all following zero
                        // WORDs
    je      loop2       // end of buffer; look for
                        // remaining 0x0100 WORDs
    inc     ecx
    inc     ecx
    sub     edi,4
loop1c:
```

```
        repne  scasw      // look for next 0x0000 WORD
        jne    loop2      // none found. look for any
                          // remaining 0x0100 WORDs
        mov    edx.[edi]  // get start code and preceding
                          // and following byte
        cmp    dl.1       // byte following 0x0000 must be
                          // 0x01 to be start prefix
        jne    loop1b     // if it isn't. skip


               // As Bob W. and I discussed, a start code of zero
               // followed by a zero word cannot be a "real"
               // start code. so we skip it.


        shr    edx,8
        or     edx.edx    // look for 3 zero bytes
        jz     loop1b     // if found, skip


               // In audio, we only look for 0xC0 through 0xDF
               // start codes


        cmp    byte ptr isAudio.0
        je     loop1d
        xor    dl.0C0h
        cmp    dl.020h
        jae    loop1b     // not an audio start code
loop1d:
        lea    ebx,[edi-2] // remember the offset of this
                          // 0x0000 WORD


               // Now we're going to search this same subbuffer
               // for any 0x0100 patterns.


loop2:
        mov    bufLenAdj.ecx  // save this for next 0x0000
                              // search
```

```
        mov     ecx,edi      // compute length of this
                             // subbuffer
        xchg    edi,bufp                    .
        sub     ecx,edi
        shr     ecx,1      // WORD not BYTE search
        dec     ecx        // Move to the 2nd WORD in the
                             // subbuffer
        inc     edi
        inc     edi


loop2a:
        or      ecx,ecx
        jz      loop1      // end of input buffer; clean up
                             // and exit
        mov     eax,100h    // pattern to search for
        repne   scasw       // do the search
        jne     loop1       // none found - go look for next
                             // 0x0000 pattern
        mov     edx,[edi-3] // load complete start code
        rol     edx,8       // move start code token to DL,
                             // 1st byte of prefix
        or      dh,dh       //  to DH - if not zero, not a
                             //  start code
        jnz     loop2a      // no start code, skip


        // Again, 3 zero bytes following 0x00 0x00 0x01 is
        // not a valid start code.


        test    dword ptr [edi],0FFFFFFh
        je      loop2a      // in this case, we don't
                             // acknowledge it
        cmp     byte ptr isAudio,0
        je      loop2b
        xor     dl,0C0h                  .
        cmp     dl,020h
```

```
        jae    loop2a      // not an audio start code
        xor    dl,0C0h
loop2b:
        lea    eax,[edi-3] // get offset of start prefix
        sub    eax,buf     // convert to buffer offset
        add    eax,eax     // do the high bit set on PES
                           // header trick
        xchg   esi,edi
        xor    dl,0C0h
        cmp    dl,030h
        rcr    eax,1
        stosd
        xchg   esi,edi
        dec    hCnt        // output buffer full?
        jnz    loop2a      // if not, go for it again
exitRoutine:
        mov    esi,savESI  // restore registers C++ compiler
                           // wants back
        mov    edi,savEDI
        push   word ptr savFLAGS
        popf
    }

    return(listSize - hCnt);   // return number start codes
                               // found
    }
```

The presently preferred embodiment of the invention is optimized for the 80x86/Pentium architecture. Those skilled in the art will appreciate that the invention may be used with other architectures. The preferred embodiment of the invention locates the start codes in a buffer of memory at very high speed by using a combination of string instructions and other features of the Intel processor's architecture, the processor's 32-bit instruction set. and available addressing modes.

Because the invention uses features built into the hosting processor's architecture that allow for fast buffer operations, the algorithm is capable of locating start codes in a memory buffer at very high speeds. Those skilled in the art will appreciate that various known hardware and/or software technique may also be used to perform such operations.

As a benchmark example of the performance achieved using the invention, a 20 megabyte capture of a MPEG-2 stream was processed. Using the invention, a text file describing more than twenty-thousand start codes was written in less than one second on a 266 MHz Pentium machine running Windows NT 4.0. This run time was achieved on second and subsequent runs when the 20 megabyte MPEG-2 file was already loaded into the disk cache. In its first actual application, the invention reduced total CPU use by approximately 60%.

Other embodiments of the present invention generate a secondary channel of information that notifies later MPEG2 decoding stages of any transitions that occur between various kinds of structures in an MPEG2 datastream. The information in such secondary channel can be used to simplify decoding of the MPEG2 datastream at every stage

EP 1 276 331 A2

of processing. This is especially useful in the software implementation of an MPEG2 decoder.

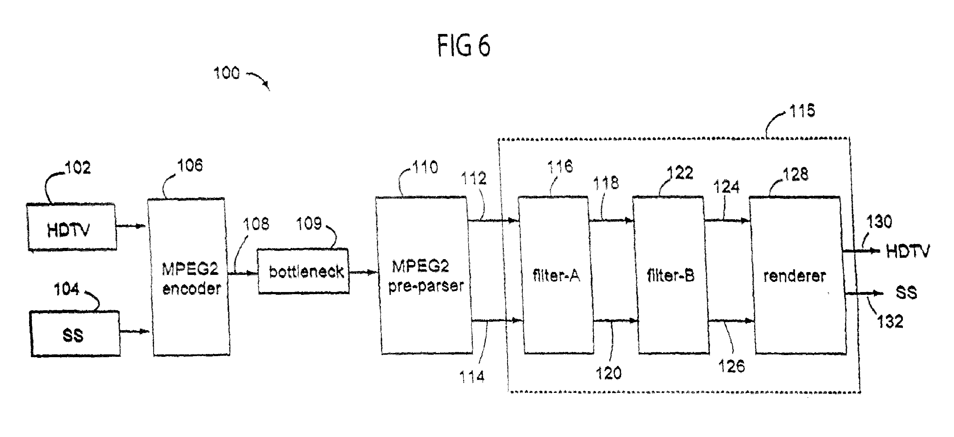

In Fig. 6, an MPEG2 system 100 includes a high-definition television (HDTV) video source 102 and a surround-sound (SS) source 104. A conventional MPEG2 encoder 106 compresses the HDTV and SS signals into an MPEG2 datastream 108 according to the industry-standard MPEG2 Specification. Such MPEG2 datastream 108 may be stored on an optical disk or transmitted over a limited-bandwidth communication line represented by a device 109.

A pre-parser 110 basically samples the incoming MPEG2 datastream 108 and outputs it as a series of MPEG2 samples 112. The pre-parser 110 analyzes the MPEG2 datastream 108 and outputs a secondary channel 114 which contains "heads-up" descriptions and notifications. In practice, these descriptions and notifications are maintained in a table in main memory. The pre-parser 110 can be implemented in software, and communicate the MPEG2 samplcs and descriptors with table calls between subroutines. The secondary channel 114 describes where various data structure transitions occur in the MPEG2 sample. A software-implemented MPEG2 decoder 115 uses the notifications in the secondary channel 114 to decode the MPEG2 samples 112. Such MPEG2 decoder 115 may be stored in an executable DLL-type disk file.

The decoding of the MPEG2 compressed sample 112 can be done without the assistance of the information in the secondary channel 114, but the MPEG2 decoder 115 would probably require a rather more expensive implementation in digital hardware. Such notifications in the secondary channel 114 constitute pre-parsing data, and specify the locations in the MPEG2 compressed sample 112 of various structural features. Such features include ES-start codes, audio frame headers, PES-headers, and the far more common basic payloads. The software-implemented MPEG2 decoder 115 is saved the rather laborious and CPU-intensive job of parsing.

The MPEG2 decoder 115 is represented in Fig. 6 as a three-stage filter, in which a first stage filter 116 passes along an MPEG2 output 118 and pre-parser output 120. The first-stage filter (A) 116 and a second-stage filter (B) 122 are spared the job of parsing the MPEG2 sample 112 because the pre-parser 110 has already done most or all of it for them. The second-stage filter 122 outputs a modified MPEG-2 datastream 124 and an updated secondary channel 126 to a final stage filter, e.g., a renderer 128, that in turn outputs the decompressed and reconstructed HDTV and SS signals 130 and 132. The renderer is also spared the job of parsing the MPEG2 sample 112 because it receives the pre-parser information in secondary channel 126.

Each filter 116 and 122 can modify the MPEG2 datastream, unless it's a rendering filter 128. Such modifications can include adding, removing, or changing some data features, and can thereby change the run lengths. Each filter stage sends its modified MPEG2 datastream on to the next filter which also might do some of its own modifications.

MPEG2 datastream parsing is tedious and error-prone. so it's best to avoid duplicating this job especially when it's not necessary. MPEG2 decoder embodiments of the present invention use pre-parsing to do this job only once at the point the MPEG2 datastream enters the receiver or decoding system. A list of "descriptors" is generated by the pre-parser 110 for each sample of any reasonable length of the MPEG2 datastream 108. Such descriptor lists then travel in secondary channels 114, 120, and 126, alongside the MPEG2 samples 112, 118, and 124. Each filter 116, 122, and 128, that processes the MPEG2 samples will update the descriptor lists in the secondary channels in a daisy-chain style. The descriptor lists in the secondary channels are easy to maintain, and only add small extra processing overheads to each filter. But very significant amounts of processing horsepower are saved by not requiring each processing step in each filter to go through the parsing effort itself.

Pre-parsing adds a parallel datastream of data to a MPEG2 data datastream. This secondary datastream includes an array of 16-bit integers called "descriptors" or "notifications". Notifications are intended to provide information beyond that which is already embedded in the MPEG2 datastream, e.g., discontinuities and audio frame size changes. Such heads-up information in a secondary channel make processing of MPEG2 datastreams that much easier.

A descriptor describes both a type and a length. Four types have initially been defined, e.g., a basic payload, an audio-frame header, an ES start-code, and a PES header. A16-bit integer is used to encode the type and the length. The basic payload type can be of variable length and very long. The audio-frame header type is of variable length, but small, usually no more than eight bytes. The ES start-code type is usually fixed and only four bytes long. The PES header type is of variable length, but less than 512 bytes. In actual practice, the basic payload type includes all those structures that do not fit into the other three classifications of audio-frame header, ES start-code, and PES header.

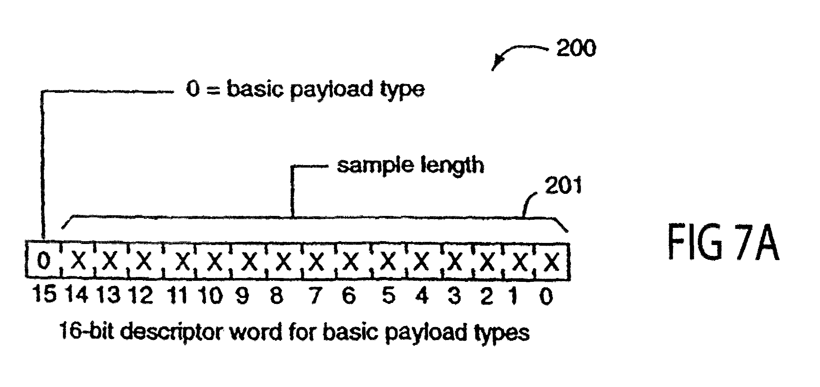

As shown in Fig. 7A, if the most-significant bit in a 16-bit descriptor 200 is zero, then the MPEG2 sample is a basic payload type. The remaining fifteen bits 14-0 define the MPEG2 sample length in a sample length field 201. The secondary channel can use multiple-contiguous basic payload descriptors. It is permissible to have basic payload descriptors of all zeroes, which implies a sample-length of zero bytes. Such all-zero descriptors can be used as nulls or padding elements in a descriptor array.

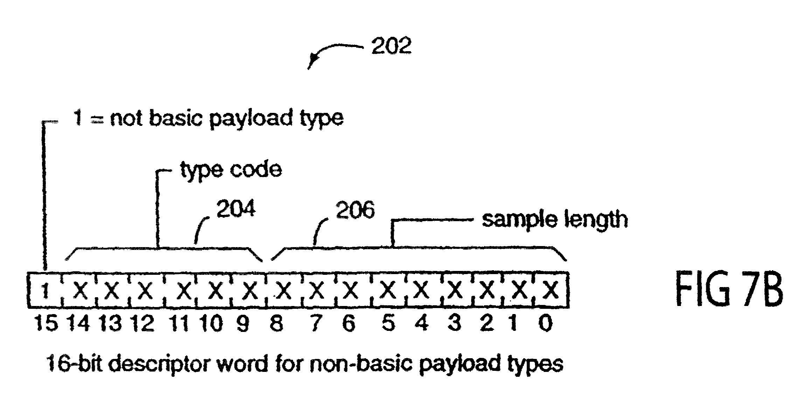

All the other descriptor types, and all notifications, have the most-significant bit in their 16-bit value set to one, as in Fig. 7B. In a descriptor 202, bits 14-9 in a type field 204 define the type, and bits 8-0 in a size field 206 define the MPEG2 sample length.

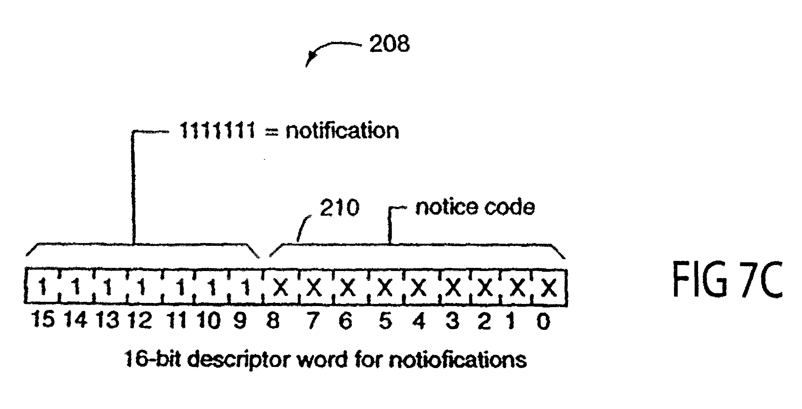

As shown in Fig. 7C. if bits 15-9 are all ones, the descriptor is defined to be a notification word 208, and bits 8-0 in a notice code field 210 define the exact notification.

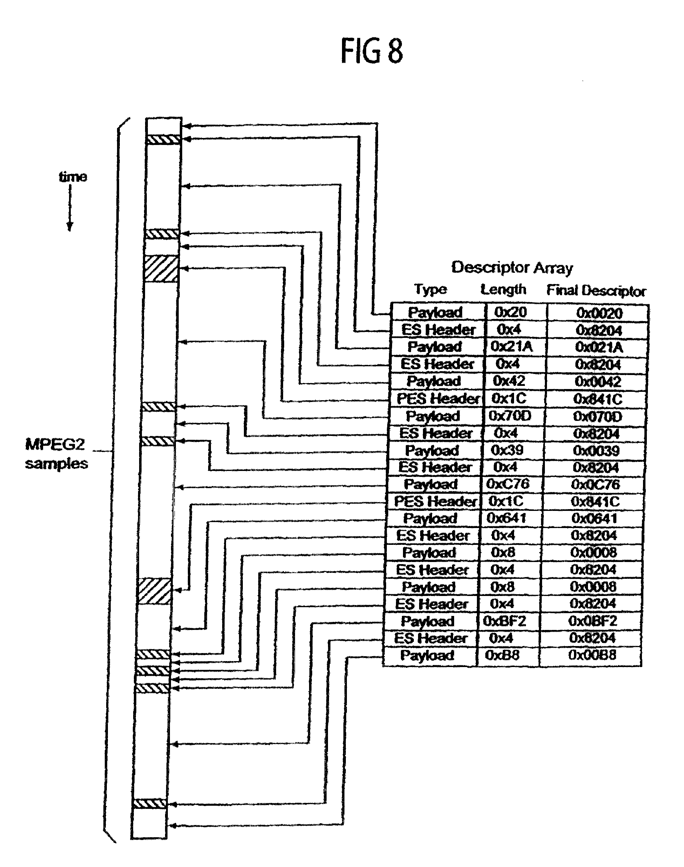

In operation, each MPEG2 datastream sample has a descriptor array or table initially allocated in main memory by pre-parser 110. Consider Fig. 8. Each MPEG2 sample must have every part defined by an entry the descriptor array. Such descriptor array must therefore be large enough to hold all the 16-bit descriptors that could be necessary to fully characterize the entire MPEG2 sample, and including any notifications. It is therefore preferable to allocate descriptor arrays that are larger than is initially needed, and to fill the unused end with zeros. That way, downstream processing stages like filters 116, 122, and 128 will have enough space to add their contributions to the descriptor table without having to waste time or CPU-overhead in reallocating to a new. larger table.

Notifications are preferably coded with negative numbers. Such codes are obtained by extracting the bottom nine bits in the notice code 210 (Fig. 7C), incrementing it by one, and then changing the sign of the result to make it negative. This results in "notification tokens" ranging from "-1" to "-512". The first of these two are predefined, with "-1" indicating a discontinuity, and "-2" indicating something-of-interest happened in the MPEG2 sample. When a "-1" is received in a notice, the receiving process should reset its state machines and view the features that follow as being completely unrelated to the preceding features. In prototypes that have been constructed, the "-2" notification code is issued when the frame size changes in audio datastreams.

The descriptors diagrammed in Figs 7A-7B preferably define a length rather than an offset. The allows the descriptors to be a constant sixteen bits wide, and makes for smaller descriptor arrays. When any filter stage 116 or 122 adds or subtracts features to the MPEG2 sample, the corresponding descriptors are simply added to or deleted from the descriptor array.

If any of the constituent MPEG2 sample features are reduced or enlarged in length, only the few corresponding descriptors are updated. The others are unaffected. In the case of a basic payload, a single descriptor might have to be split into several descriptors. This can happen if the original feature was less than 32768 bytes in length, and the modified feature is larger than the fifteen binary bits in the sample length field 201 can describe.

MPEG2 datastreams are normally processed serially. So an "offset counter" can be included in pre-parser 110 that is incremented by the length of each MPEG2 sample feature. Such an offset counter is simple to build and operate.

Since the descriptors are simple, their maintenance in tables is also simple. Any major reconstruction of the descriptor table by any intermediate stage are preferably done as a repeat of the pre-parser task in a call to a DLL-type file.

Fig. 8 illustrates a typical MPEG2 video datastream sample which includes payload, ES-headers, and PES-headers all head-to-toe in a single datastream. If there were no pre-parsing, each processing stage 116, 122, and 128 must locate each MPEG2-feature boundary itself. But with pre-parsing like that provided by pre-parser 110, an "offset counter" is used that is initialized to zero at the start of each MPEG2 sample. The offset counter is incremented by the length of each feature as the descriptor table is sequentially scanned and functions as an address register. For example, a PES header will have "0x8400" in the top seven bits of its descriptor. The lengths of all the sample features can be added while looking for other feature descriptors. In Fig. 8, PES-headers exist at offsets 0x284 (0x20 + 0x4 + 0x21 A + 0x4 + 0x42), and also at 0x1664 (0x284 + 0x1C + 0x70D + 0x4 + 0x39 + 0x4 + 0xC76). The length of each feature can be quickly determined. Fig. 8 indicates that both the PES-headers are of equal length (0x1C), but this is not always the case. If the goal is simply to accumulate payloads, then the parts of the input sample to "skip over" can be easily recognized. A lot of processing time can be saved in the later processing stages by using the descriptor table instead of trying to evaluate the MPEG2 sample datastream directly.

ISO/IEC Specification 13818-1 allows for PES-headers to be inserted within other feature types. Embodiments of the present invention only allow such insertions for basic-payload features. So PES-headers be relocated to one side or the other of any feature they invade. When this happens, the content of the PES-headers must be adjusted slightly to compensate for the change in absolute location within the MPEG2 datastream.

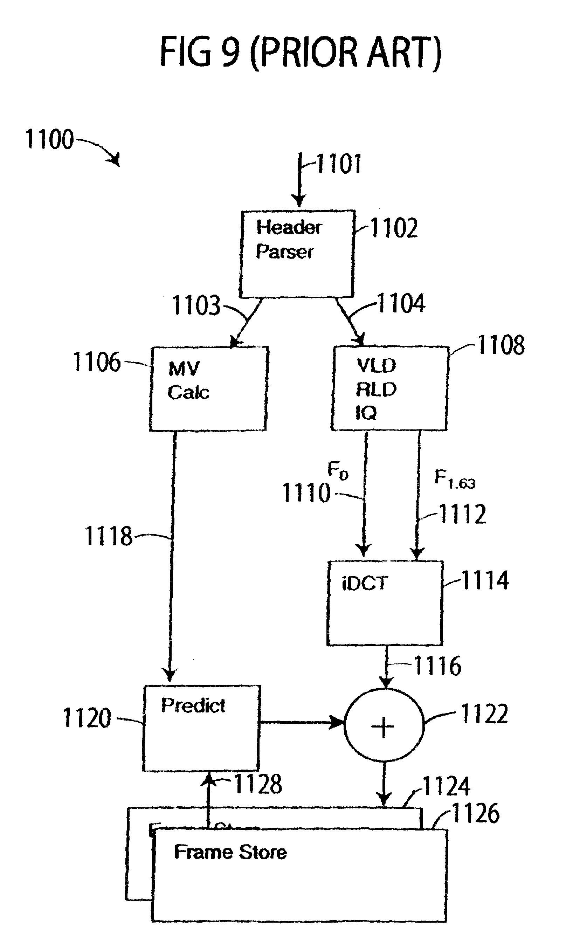

Fig. 9 is a functional block diagram of an MPEG-2 video decoding processor 100. An incoming MPEG-2 datastream 101 is received by a header parser 102 for decompression. The local spatial decorrelation methods in MPEG and JPEG are very similar. Picture data is block transform coded with the two-dimensional orthonormal 8*8 DCT. The resulting sixty-three AC transform coefficients are mapped in a zigzag pattern to statistically increase the runs of zeros. Coefficients of the vector are then uniformly scalar quantized, run-length coded, and finally the run-length symbols are variable length coded using a canonical (JPEG) or modified Huffman (MPEG) scheme. Global frame redundancy is reduced by 1-D DPCM, of the block DC coefficients, followed by quantization and variable length entropy coding.

The header parser 1102 separates a motion vector information stream 1103 from a compressed MPEG-2 video bit stream 1104. A motion vector (MV) calculator 1106 and a variable length decoder (VLD) 108 receive the separated streams. The bit stream 1104 is further processed in the VLD 1108 to reconstruct the original zero frequency (DC) and up to sixty-three non zero frequency (AC) coefficients. A run length decoder and an inverse quantization included in the VLD 1108 help produce an $F_0$ stream 1110 containing the DC coefficient and an $F_{1.63}$ stream 1112 containing the AC coefficients. The DC and AC coefficients are further processed to yield the correction terms in the frequency domain. An inverse discrete cosine transformer 1114 transforms the discrete cosine in the $F_0$, $F_{1.63}$ stream 1110/1112 from the frequency domain back to the spatial domain. A spatial-domain output 1116 is produced.

Motion vector information is used to calculate an effective motion vector output stream 1118 in the MV calculator 1106. A predictor 1120 uses such effective motion vectors to build a prediction that is forwarded to a summer 1122. A frame store 1124 and 1126 allow reference pictures that have been previously decoded and stored to be used later by the predictor 1120. The sub-routines listed herein for MPEG-2 interpolation cases A-D are typically implemented in the construction of the predictor 1120. A resulting predicted block of pixels is combined in summer 1122 with the result of the inverse discrete cosine transform to yield a final reconstructed macroblock, e.g., and stored in frame stores 1124 and 1126.

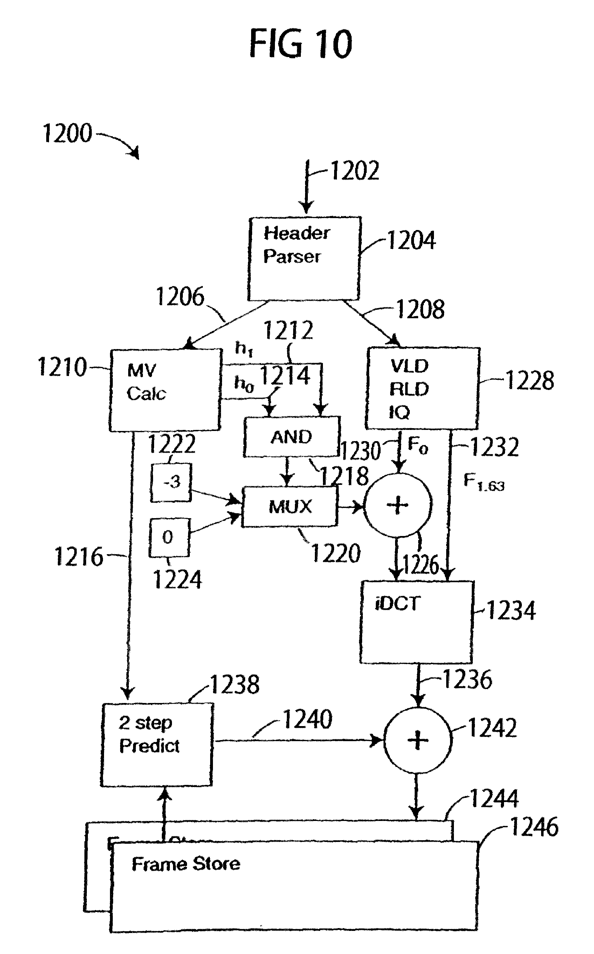

Fig. 10 represents an MPEG-2 video decoder embodiment of the invention, and is referred to herein by the general reference numeral 1200. The MPEG-2 video decoding method 1200 prevents the accumulation of rounding errors. Such enables the use of the improved dual-step half-pixel prediction scheme for MPEG-2 interpolation case-D. The embodiments of the present invention can also be used to improve the image quality for implementations that already use the dual-step half-pixel prediction scheme, i.e., if the steps prior to the inverse discrete cosine transform are implemented in software.

It can be assumed that the rounding error is evenly distributed over all pixels in each of the affected macroblocks. Statistics can therefore be used to prevent the negative visual effects caused by accumulating the rounding errors. In general, embodiments of the invention subtract the rounding error from all macroblocks that need MPEG-2 interpolation case-D processing. The overall error is thus eliminated.

With integer processing, it is not possible to subtract the error value after the inverse discrete cosine transformation. Fortunately, the inverse discrete cosine transform defined in the MPEG-2 decoding standard has an effective division of eight for the DC coefficient. Taking advantage of this, a correction term of 0.375 can be subtracted for all macroblocks that need case-D processing as integer value three off the DC coefficient just before the inverse discrete cosine transformation. The resulting energy difference of twenty-four is distributed over all sixty-four transformed correction terms. This results in a statistical distribution of -0.375 that zeros-out the 0.375 error that is introduced by dual-step half-pixel prediction.

Embodiments of the invention eliminate the need to add a correction term during the averaging operation by using appropriate correction terms for the DC coefficient for all cases (A to D) before the inverse discrete cosine transform process. This could enable the use of a simple alpha blending unit in a state of the art graphics accelerator to perform motion compensation compatible with the MPEG-2 standard, without the need to enhance it with an MPEG-2.

In Figure 10, a two-step motion prediction for MPEG-2 interpolation case-D yields visual artifacts if not corrected. The invention is placed into the embodiment, as a combination of a logic AND circuit in combination with a multiplexer, and an adder. If both the horizontal ($h_0$) and vertical ($h_1$) motion vector components require a half pixel interpolation (case-D), the multiplexer forwards the constant minus three to the adder, in other cases the constant zero is used. The adder adds the outcome of the multiplexer to the DC coefficient, to form a new DC coefficient, that contains the correction term for the predicted pixels calculated by the two step predictor.

A correction value of -0.375 is evenly distributed over all sixty-four resulting spatial coefficients during the inverse discrete cosine transform. This results statistically in a slightly darker set of correction terms. This eliminates the slightly brighter prediction formed by the two step predictor. The output frames are statistically correct images.

The decoder 1200 implementation in Fig. 10 receives an MPEG-2 datastream 1202 with a header parser 1204. The header parser 1204 separates a motion vector information stream 1206 from a compressed MPEG-2 video bit stream 1208. A motion vector (MV) calculator 1210 produces a vertical motion vector component $h_1$ output 1212, a horizontal motion vector component $h_0$ output 1214, and an MV output 1216. An AND-gate 1218 causes a multiplexer 1220 to select a minus-three value 1 222 or a zero value 1224. When the $h_0$ output 1214 and $h_1$ output 1212 are both true, the minus-three value 1222 will be selected and passed to an adder 1226. A processor 1228 includes a variable length decoder (VLD), run length decoder, and an inverse quantization unit. It produces a direct current (DC) coefficient $F_0$ output 1230 and an alternating current (AC) coefficients $F_{1.63}$ output 1232. The processor 1228 reconstructs the original DC coefficient and up to sixty-three AC coefficients.. An inverse discrete cosine transformer1234 transforms the discrete cosine in the $F_0$, $F_{1.63}$ stream 1230/1232 after correction by adder 1226. A spatial-domain output 1236 is produced.

A two-step predictor 1238 can then be used which can take advantage of the "pavgusb" instruction in some commercial microprocessors when the MPEG-2 interpolation case-D is encountered. Specifically, case-D is,

```
case-D:
if (half_flag[0]&&half_flag[1])
        pel_pred[y][x]=(pel_ref[y+int_vec[1]][x+int_vec[0]]+
                            pel_ref[y+int_vec[1]][x+int_vec[0]+1]+
                            pel_ref[y+int_vec[1]+1][x+int_vec[0]]+
                            pel_ref[y+int_vec[1]+1][x+int_vec[0]+1])//4 .
```

Thus, the high level programming statement, "avg(avg($p_{00}$, $p_{01}$), avg($p_{10}$, $p_{11}$))", is allowable and now preferred in the implementation of embodiments of the invention. This, however produces an accumulated rounding error that is statistically zeroed out in an adder 1242 that combines the spatial-domain output 1236 and a prediction output 1240. These produce a series of frame stores 1244 and 1246 that are referenced by the two-step predictor 1238 between intra-pictures.

Although the invention is described herein with reference to the preferred embodiment, one skilled in the art will readily appreciate that other applications may be substituted for those set forth herein without departing from the spirit and scope of the present invention. Accordingly, the invention should only be limited by the claims included below.

**Claims**

1.   A method for decompressing MPEG-2 datastreams, comprising:

separating an MPEG-2 datastream into a motion vector datastream and a coefficients datastream;
using a two-step half-pixel prediction process on said motion vector datastream that produces a rounding error when a predicted frame is used as a reference frame in a subsequent prediction; and
modifying said coefficients datastream before entering an inverse discrete cosine transform stage in a way that results in a zeroing out of pumping artifacts in a frame store.

2.   The method of claim 1, wherein:

the step of modifying is such that said discrete cosine transform stage receives a DC coefficient that has been modified according to a vertical motion vector component $h_1$, a horizontal motion vector component $h_0$ output from a motion vector calculator and derived from said motion vector datastream.

3.   The method of claim 2, wherein:

the step of modifying is such that said discrete cosine transform stage receives a DC coefficient is modified by a constant if both said vertical motion vector component $h_1$ and said horizontal motion vector component $h_0$ indicate a MPEG-2 half-pixel interpolation case-D situation.

4.   The method of claim 2, further comprising the steps of:

deriving a DC coefficient and a plurality of AC coefficients from said coefficients datastream with a variable length decoder, a run length decoder, and an inverse quantization unit;
transforming an inverse discrete cosine;
adding a constant to said DC coefficient before the step of transforming;
calculating a motion vector from said motion vector datastream to produce a vertical motion vector component $h_1$ and a horizontal motion vector component $h_0$; and
if a logical-AND of both said vertical motion vector component $h_1$ and said horizontal motion vector component $h_0$ are true, then the step of adding is such that a constant of minus-three is added to said DC coefficient, otherwise a constant of zero is added.

5.   The method of claim 4, wherein:

the step of adding is such that a new DC coefficient is formed for the step of transforming that includes a correction term for a set of predicted pixels calculated by a two-step predictor.

6. An MPEG-2 decoder, comprising:

a header parser for separating an MPEG-2 datastream into a motion vector datastream and a coefficients datastream;

a motion vector calculator connected to receive said motion vector datastream and for providing a vertical motion vector component $h_1$ and a horizontal motion vector component $h_0$;

a coefficients decoder connected to receive said coefficients datastream and for deriving a DC coefficient and a plurality of AC coefficients with a variable length decoder, a run length decoder, and an inverse quantization unit;

a two-step half-pixel prediction processor connected to receive a motion vector output from the motion vector calculator, and for providing a predicted frame with a rounding error that occurs when said predicted frame is used as a reference frame in a subsequent prediction;

a logic unit connected to receive said DC coefficient and said vertical motion vector component $h_1$ and a horizontal motion vector component $h_0$, and providing for a modification of said DC coefficient to produce a modified DC coefficient that is dependent on said vertical motion vector component $h_1$ and said horizontal motion vector component $h_0$ ;

an inverse discrete cosine transformer connected to receive said modified D C coefficient from the logic unit and plurality of AC coefficients from the coefficients decoder; and

a combiner for summing an output of the two-step half-pixel prediction processor and the inverse discrete cosine transformer, and for providing a series of frames;

wherein, said DC coefficient is modified before entering the inverse discrete cosine transformer in a way that results in a zeroing out of pumping artifacts in said frames that would otherwise be caused by rounding errors that occur in the two-step half-pixel prediction processor.

7. The MPEG-2 decoder of claim 6, wherein:

the logic unit is such that if both said vertical motion vector component $h_1$ and said horizontal motion vector component $h_0$ are true, then the adder uses a constant of minus-three which is added to said DC coefficient, otherwise a constant of zero is added.

8. The MPEG-2 decoder of claim 6, wherein:

the logic unit is such that said modified DC coefficient includes a correction term for a set of predicted pixels calculated by the two-step half-pixel prediction processor.

FIG 1   (PRIOR ART)

FIG 2   (PRIOR ART)

# FIG 3

FIG 4

## FIG 5A

FIG 5B

0347
0306
02D4
029D
027C
022B
01E2
01C6
0141
00BE
007A
0031
0023
0010

# FIG 5C

0347
0306
02D4
029D
027C
022B
01E2
01C6
0141
00BE
007A
0031
0023
0010

EP 1 276 331 A2

FIG 5D

# FIG 5E

0347
0306
02D4
029D
027C
022B
01E2
01C6
0141
00BE
007A
0031
0023
0010

EP 1 276 331 A2

# FIG 5F

0347
0306
02D4
029D
027C
022B
01E2
01C6
0141
00BE
007A
0031
0023
0010

EP 1 276 331 A2

# FIG 5G

0347
0306
02D4
029D
027C
022B
01E2
01C6
0141
00BE
007A
0031
0023
0010

EP 1 276 331 A2

# FIG 5H

0347
0306
02D4
029D
027C
022B
01E2
01C6
0141
00BE
007A
0031
0023
0010

EP 1 276 331 A2

FIG 51

EP 1 276 331 A2

# FIG 5J

0347
0306
02D4
029D
027C
022B
01E2
01C6
0141
00BE
007A
0031
0023
0010

# FIG 5K

0347
0306
02D4
029D
027C
022B
01E2
01C6
0141
00BE
007A
0031
0023
0010

EP 1 276 331 A2

FIG 5L

0347
0306
02D4
029D
027C
022B
01E2
01C6
0141
00BE
007A
0031
0023
0010

EP 1 276 331 A2

FIG 5M

EP 1 276 331 A2

FIG 6

EP 1 276 331 A2

EP 1 276 331 A2

0 = basic payload type

sample length

201

200

| 0 | X | X | X | X | X | X | X | X | X | X | X | X | X | X | X |
|---|---|---|---|---|---|---|---|---|---|---|---|---|---|---|---|
| 15 | 14 | 13 | 12 | 11 | 10 | 9 | 8 | 7 | 6 | 5 | 4 | 3 | 2 | 1 | 0 |

16-bit descriptor word for basic payload types

FIG 7A

EP 1 276 331 A2

202

1 = not basic payload type

type code

204    206    sample length

| 1 | X | X | X | X | X | X | X | X | X | X | X | X | X | X | X |
|---|---|---|---|---|---|---|---|---|---|---|---|---|---|---|---|
| 15 | 14 | 13 | 12 | 11 | 10 | 9 | 8 | 7 | 6 | 5 | 4 | 3 | 2 | 1 | 0 |

FIG 7B

16-bit descriptor word for non-basic payload types

EP 1 276 331 A2

208

1111111 = notification

210    notice code

| 1 | 1 | 1 | 1 | 1 | 1 | 1 | X | X | X | X | X | X | X | X | X |
|---|---|---|---|---|---|---|---|---|---|---|---|---|---|---|---|
| 15 | 14 | 13 | 12 | 11 | 10 | 9 | 8 | 7 | 6 | 5 | 4 | 3 | 2 | 1 | 0 |

16-bit descriptor word for notiofications

FIG 7C

# FIG 8

Descriptor Array

| Type | Length | Final Descriptor |
|---|---|---|
| Payload | 0x20 | 0x0020 |
| ES Header | 0x4 | 0x8204 |
| Payload | 0x21A | 0x021A |
| ES Header | 0x4 | 0x8204 |
| Payload | 0x42 | 0x0042 |
| PES Header | 0x1C | 0x841C |
| Payload | 0x70D | 0x070D |
| ES Header | 0x4 | 0x8204 |
| Payload | 0x39 | 0x0039 |
| ES Header | 0x4 | 0x8204 |
| Payload | 0xC76 | 0x0C76 |
| PES Header | 0x1C | 0x841C |
| Payload | 0x641 | 0x0641 |
| ES Header | 0x4 | 0x8204 |
| Payload | 0x8 | 0x0008 |
| ES Header | 0x4 | 0x8204 |
| Payload | 0x8 | 0x0008 |
| ES Header | 0x4 | 0x8204 |
| Payload | 0xBF2 | 0x0BF2 |
| ES Header | 0x4 | 0x8204 |
| Payload | 0xB8 | 0x00B8 |

time

MPEG2 samples

# FIG 9 (PRIOR ART)

# FIG 10